(19) Europäisches Patentamt
European Patent Office
Office européen des brevets

(11) EP 2 168 445 A1

# (12) EUROPEAN PATENT APPLICATION

(43) Date of publication:
**31.03.2010 Bulletin 2010/13**

(51) Int Cl.:
***A23L 1/308*** *(2006.01)* ***A23L 1/10*** *(2006.01)*

(21) Application number: **08425635.3**

(22) Date of filing: **29.09.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Barilla G. e R. Fratelli S.p.A.**
**43100 Parma (IT)**

(72) Inventors:
- **Arlotti, Guido**
  **43100 Parma (IT)**
- **Ranieri, Roberto**
  **43052 Colorno (Parma) (IT)**
- **Fogliano, Vincenzo**
  **00166 Roma (IT)**
- **Napolitano, Aurora**
  **80049 Somma Vesuviana (Napoli) (IT)**

(74) Representative: **Ferreccio, Rinaldo**
**c/o Botti & Ferrari S.r.l.**
**Via Locatelli 5**
**20124 Milano (IT)**

## (54) Method for the treatment of bran for the obtention of a dietary fibre composition having an increased content of soluble fibre and the use of said composition in functional food products

(57) Method for the treatment of bran to obtain a dietary fibre composition having an increased soluble fibre content, which comprises the step of subjecting the bran to solubilization in the presence of an enzymatic mixture obtained from a culture of a *Trichoderma* strain, the culture being incubated on substrate containing at least 1% (w/v) of bran in conditions suitable for the production of lytic enzymes. Also described is a dietary fibre composition having prebiotic properties which contains a quantity of soluble fibre greater than about 2% by weight over the total dry weight of the total fibre and a polyphenols level of at least about 0.15 measured in mg of gallic acid per 100 g of fibre according to the Folin-Ciocalteus method, obtainable by the method of the invention. Also described is a functional food product having prebiotic properties comprising the dietary fibre composition according to the invention, and the use of the dietary fibre composition of the invention for the preparation of functional food products of the type chosen from: pasta, bakery products, breakfast cereals, a snack or a drink.

Figure 15

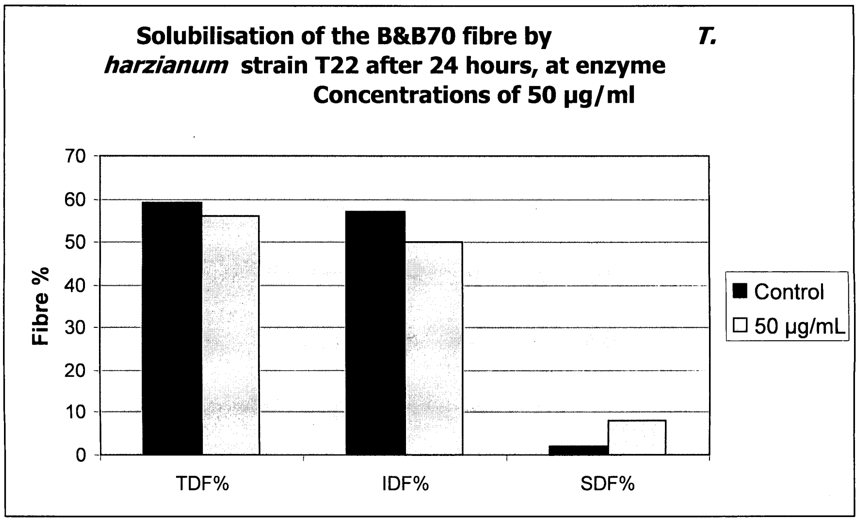


EP 2 168 445 A1

## Description

Field of application

The present invention generally refers to the technical field of the food industry.

In particular, the invention regards a method for treating bran to obtain a dietary fibre composition having an increased soluble fibre content.

The present invention further refers to the dietary fibre composition having an increased soluble fibre content obtained from the method of the invention and its use in the preparation of high soluble fibre content functional food products, in particular having prebiotic properties.

Prior Art

It has been extensively proven that consumption of fibre-rich foods has a positive effect on health. Nowadays, expert nutritionists recommend a daily intakeof 25g of total fibre, 25% of which represented by soluble fibre (Fed. Reg., 2002).

In actual fact, statistics show that, in western countries, the daily intake amounts only to 14-15 g of total dietary fibre per capita and that there is an even greater deficiency in the intake of soluble fibre.

The term dietary fibre is used to indicate "the group of substances of plant origin that are not digested by the enzymes secreted by the human digestive system, which are only partially fermented by the intestinal bacterial microflora and which fall into the following categories: polysaccharides, oligosaccharides, lignin and other substances associated with plants" (AACC, 2001).

Depending on their solubility in and affinity to water, fibres are classified as soluble or insoluble fibres. The soluble fibres class includes polysaccharides such as pectins, glucomannans, beta-glucans, oligosaccharides, inulin and fructoligosaccharides (FOS). Insoluble fibres mainly comprise cellulose and hemicellulose combined with non-polysaccharide components such as lignin, waxes, etc.

Insoluble fibres are mainly found in cereal bran, and they are characterised, above all, by their ability to bind water.

Bran is a by-product from the production of flour from plants of the Graminae family (wheat, barley, rye, oat and other cereals), for human consumption, mainly consisting of the outer husks of the caryopses. It is mainly used as animal feed.

Soluble fibres are mainly present in fruits, in some legumes, in vegetables and in oat flakes. They are capable of forming gels and are highly fermentable by the intestinal microflora.

Fermentability is essentially due to the intestinal bacterial flora which, unlike the enzymes of the digestive system, is capable of attacking the fibre polysaccharides thereby producing various types of compounds, including, most notably, short chain fatty acids (SCFA), for example acetic, propionic and butyric acids.

These products can be partially used by the intestinal or hepatic cells as sources of energy; furthermore they contribute to the acidification of the colonic environment, thus influencing bacterial proliferation and also modulating the postprandial glycemia. Furthermore, formation of SCFAs is deemed essential to maintain a proper functioning of the gastrointestinal mucosa (Velasquez *et al.* 1997).

Due to its fermentability and its ability to bind water, the fibre seems to considerably affect faecal expulsion (Williams & Olmstead 1936; Cummings *et al.* 1979), giving an anti-constipation effect.

Finally, the fermentation of some types of fibres accompanied by the production of short chain fatty acids, in particular propionic acid, reduces the hepatic synthesis of cholesterol (Roberts *et al.* 1994), while an increase in the viscosity of the contents of the intestinal lumen allows a considerable reduction in the recovery of dietary fatty acids and an increase in the elimination of cholesterol (Gallaher *et al,* 1993).

Various intervention clinical studies have experimentally found a series of positive effects associated with the consumption of soluble fibres, such as the reduction in the incidence of coronary heart disease; a reduction in the incidence of cancer, especially colon cancer; control on the complications of diverticular disease; overweight control; control of pathologies caused by altered intestinal motility; control of diabetes.

In the light of this knowledge, food research has long been engaged in the development of strategies to increase the soluble fibre content of staple foods.

The chemical-physical methods (Inglett, 1997; Ang, 2001; Gurkin, 2002) are generally quite complex in that they require a long series of procedural steps and they involve the use of harsh conditions (for example heat and/or the use of chemical reagents).

This finally results in products which, though highly purified (at high concentration, white in colour, odorless), are also lacking all those valuable nutritional components (*phytochemicals*) naturally associated with the original polysaccharide matrix referred to as *"dietary fibre complex"* (Dietary Fibre Conference 2006) or also more recently referred to as *"antioxidant dietary fibre"* (Alexander, 2007).

Research has thus focused on the possibility of using enzymatic mixtures for this purpose.

Document JP 6070720 describes a process for obtaining a dietary fibre composition having the properties of both the soluble and insoluble dietary fibres, comprising the steps of treating wheat bran with proteases or amylases and a partial hydrolysis using acids to shift the pH value to 2-4 and using high temperatures (60-100°C).

However, this method has the drawback of not allowing a high soluble fibre content, considering the treatment conditions applied, and that of significantly altering the characteristics (organoleptic, nutritional) of the starting fibre.

Other three documents, JP 4071466, JP 3049662 and JP 2303459, describe processes for obtaining water-soluble dietary fibres through the alkali extraction of bran and subsequent treatment of the extract by means of enzymes such as glucosidases, xylanases and cellulases.

Also in this case, the processes described have the drawback of using methods involving the use of bases (alkaline attack) as chemical reagents in combination with enzymatic methods, which lead to a transformation of the organoleptic and nutritional characteristics of the starting fibre.

There are various *Trichoderma* strains known for their ability to produce enzymes which degrade cellulose.In fact, various species of *Trichoderma* contain in their genome coding sequences for a large series of enzymes (chitinases, glucanases, xylanases, cellulases) capable of hydrolysing practically any plant material. Most of the studies were carried out on various strains of *T. reseei* and *T. harzianum.* Studies were performed on these fungi for their ability to produce extracellular cellulolytic enzymes, such as endoglucanases, exoglucanases, cellobiases, xylanases, which operate synergically in the conversion of cellulose into glucose (Eveleigh, 1987).

Some strains have been modified genetically to obtain high levels of cellulases (Mandels and Andreotti, 1978; Nevalainen *et al.* 1988; Szengyel *et al.* 2000) and reduce the costs of production.

Document US 5 458 893 (Quaker Oats) describes a process for treating water-soluble dietary fibres with beta-glucanase. This is a process in which there is a first step of treating an aqueous dispersion of "grain" (oat or barley bran) containing gelatinized and milled beta-glucan with alpha-amylase, obtaining an insoluble fraction and a soluble fraction; the latter is then treated with beta-glucanase. Alternatively, beta-glucanase can already be added to the abovementioned aqueous dispersion. Included among the mentioned beta-glucanases is the one derived from *Trichoderma longibrachiatum.* The product can be used as a structuring agent in the preparation of food products as an edible fats replacer.

This method has the object of obtaining a soluble fibre whose properties confer it a technological use (as a *fat replacer*) similar to that of fats; such transformation occurs to the detriment of the organoleptic and nutritional characteristics of the starting fibre.

Thus, the technical problem underlying the present invention is that of providing a cost efficient, simple and effective method for treating bran on an industrial scale to obtain a composition of dietary fibre with an increased soluble fibre content, such method not deteriorating the organoleptic properties and the complexity of the composition (*phytochemicals*) of the fibre of the starting bran and hence overcoming all the aforedescribed drawbacks of the prior art.

## Summary of the invention

Such a problem has been solved, according to the invention, by a method for treating bran to obtain a dietary fibre composition having an increased soluble fibre content, comprising the step of subjecting the bran to solubilization in the presence of an enzymatic mixture obtained from a culture of a *Trichoderma* strain, said culture being incubated on a substrate containing at least 1% (w/v) of bran under suitable conditions for the production of lytic enzymes.

According to an embodiment of the present invention, the bran present in the substrate is the same as the bran subjected to solubilization.

Preferably, the *Trichoderma* strain is chosen between *T. reesei* strain 67 and *T. harzianum* strain T22.

The bran preferably consists of durum wheat bran, preferably chosen from the cereal processing by-products referred to as B&B50 and B&B70, their derivatives and mixtures thereof. Such brans (B&B) are secondary products obtained from the decortication of durum wheat caryopses and they represent particularly suitable and inexpensive substrates.

The B&Bs derive from the processing of the outer layers of the caryopses removed by means of preliminary friction and/or abrasion operations before the milling of the same. Their typical average composition is reported in the following Table 1.

Table 1 - Typical average composition of B&B bran.

| | | B&B 50 | B&B70 | B&BHF |
|---|---|---|---|---|
| Component | Unit | Minimum value | Minimum value | Minimum value |
| Moisture | % | 9.50 | 9.50 | 6.00 |

(continued)

| | | B&B 50 | B&B70 | B&BHF |
|---|---|---|---|---|
| Component | Unit | Minimum value | Minimum value | Minimum value |
| Proteins (Nx5.70) | % | 15.0 | 7.20 | 11.0 |
| Ash | % | 6.80 | 3.60 | 4.40 |
| Lipids | % | 5.9 | 3.20 | 3.00 |
| Total dietary fibre (TDF) | % | 36.0 | 59.0 | 66.0 |
| Insoluble dietary fibre (IDF) | % | 32.0 | 55.0 | 62.0 |
| Soluble dietary fibre (SDF) | % | 4.0 | 4.0 | 4.0 |

More preferably, the bran is chosen between B&B70 durum wheat bran, its derivatives (for example B&BHF, described below) and their mixtures, preferably B&B70.

In fact, a type of selected bran (B&BHF) having a high fibre content, obtained from B&B70 was also tested, using additional selective steps with the aim of ascertaining whether the higher concentration was capable of more intensely stimulating the growth of the fungus compared to the two types of bran B&B 50 and 70.

The term "enzymatic mixture" is herein used to indicate an extract of the culture of the micro-organism, such extract being composed of at least one type of enzyme.

Preferably, the enzymatic mixture contains enzymes chosen from the group comprising glucanases, xylanases, chitanases and cellulases, in particular endoglucanases and endoxylanases.

The chosen *Trichoderma* strain is preferably grown on a substrate containing about 1% bran.

According to a preferred embodiment of the method of the invention, such solubilization step comprises incubation, at a temperature variable between 20 and 30°C for 12-60 hours, of a reaction mixture comprising bran dispersed in distilled water in a ratio (w/v) comprised between 1:2 and 1:40 and enzymatic mixture at a concentration comprised between 0.001 and 0.1 % by weight over the volume of the reaction mixture.

Preferably, such ratio (w/v) of the bran to the distilled water is variable between 1:3 and 1:30.

Even more preferably, such ratio is 1:6 for a method comprising the use of an enzymatic mixture comprising enzymes of *T. reseei* strain 67 and 1:15 for a method comprising the use of an enzymatic mixture comprising enzymes of *T. harzianum* strain T22 .

Preferably, the enzymatic mixture is present in a quantity comprised between 0.005 and 0.08% by weight over the volume of said reaction mixture.

More preferably, the enzymatic mixture is present in a quantity comprised between 0.005 and 0.01% by weight over the volume of said reaction mixture.

Preferably, the reaction mixture is incubated at 25° C for 24 hours.

Furthermore, the present invention refers to a dietary fibre composition having prebiotic properties, containing a soluble fibre content above about 2% by weight over the total (dry) weight of the total fibre and a polyphenols level of at least about 0.15 measured in mg of gallic acid per 100 g of fibre according to the Folin-Ciocalteus method (Singleton *at al.,* 1965).

Preferably, the quantity of soluble fibre is comprised between about 3 and about 13% by weight over the total weight of the total fibre and the polyphenols level is at least about 0.30 measured in mg of gallic acid per 100 g of fibre according to the Folin-Ciocalteus method.

Preferably, the quantity of soluble fibre is comprised between about 7 and about 8% by weight over the total weight of the total fibre.

The present invention also refers to a functional food product having prebiotic characteristics comprising the dietary fibre composition of the invention.

Such food product can for example be pasta, bakery products, breakfast cereals, a snack or a drink.

It has been found, in fact, that by growing suitable *Trichoderma* strains on a suitable culture medium comprising B&B70 bran, B&B50 bran, their derivatives or mixtures thereof, it is possible to obtain an enzymatic mixture consisting of a certain composition of *Trichoderma* lytic enzymes, which differs from the one that would have been obtained by growing the same strains on other substrates, for example glycerol. This particular composition of enzymes has proven to be surprisingly effective in the solubilization, in turn, of the insoluble bran fibre, thus allowing to obtain, by means of high concentrations of enzymatic extract, a dietary fibre composition composed of soluble fibre even up to 12.5%.

This type of soluble fibre yield has never been observed in the solubilization of insoluble dietary fibre according to the methods of the prior art.

Furthermore, the method of the present invention has the advantage of being applicable on an industrial scale.

Furthermore, as the method uses by-products of cereal processing as the starting bran, in particular the brans referred to as B&B50 and B&B70 of the present invention, the costs of the materials are considerably reduced.

The enzymatic extract used in the method of the present invention is of fungal origin and it is extracted from the cultivation of specific *Trichoderma* strains. Both the cultivation of such strains and the extraction of the enzymes from the cultivation are feasible on an industrial scale and are thus relatively cost effective.

Furthermore, the method according to the present invention is easy to implement in that it involves the inoculation of the bran in the presence of the enzymatic extract at relatively low temperatures (about 25° C).

The processing costs are also contained due to the low temperatures required by the method.

In addition, it has been surprisingly found out that the dietary fibre composition obtained through the method of the present invention is not subject to deterioration in terms of organoleptic properties compared to the starting bran.

Furthermore, the dietary fibre composition obtained through the method of the present invention has the advantage of having prebiotic properties and a high polyphenols level. Polyphenols confer beneficial antioxidant properties to the partially hydrolysed fibre obtained.

Food products having antioxidant properties are considered to be beneficial to health in that they contribute to the protection of the organism against the action of free radicals, thus playing a role in the protection against, for example, atherosclerosis, cardiovascular and pulmonary diseases, arthritis and neurological disorders. Furthermore, such food products can contribute in delaying the occurrence of disorders related to aging.

The dietary fibre composition having the prebiotic properties obtained through the method of the present invention can in turn be incorporated in functional foods such as, for example, pasta, bakery products, breakfast cereals, snacks or drinks which shall, in turn, have prebiotic properties.

Brief description of the drawings

Figure 1 shows the chart of the glucanolytic activity of the enzymes derived from *T. viride, T. atroviride* strain P1, *T. harzianum* strain T22, *B. cinerea* and *T. reseei* strain 67 on B&B70 fibre.

Figure 2 shows the chart of the N-acetylglucosaminidase activity of the enzymes derived from the fungi *T. viride, T. atroviride* strain P1, *T. harzianum* strain T22, B. *cinerea* and *T. reseei* strain 67 on B&B70 fibre.

Figure 3 shows an SDS-PAGE electrophoretic profile of the production of specific proteins by the strains *T. harzianum* strain T22 and *T. reseei* strain 67, induced by the various substrates used: glycerol (lanes 2 and 3), lyophilized fungi (lanes 4 and 5) or B&B70 fibre (lanes 6 and 7).

Figure 4 shows the chart of the cellulolytic activity of *T. reseei* strain 67 grown on 1% B&B70, 1% B&BHF, 0.5% lyophilized fungi and on 1% glycerol.

Figure 5 shows the chart of the cellulolytic activity of *T. harzianum* strain T22 grown on 1% B&B70, 1% B&BHF, 0.5% lyophilized fungi or on 1% glycerol.

Figure 6 shows the chart of the β-1,3 glucanase activity of *T. harzianum* strain T22 and of *T. reseei* strain 67 grown on B&B70 fibre, lyophilised fungi or glycerol.

Figure 7 shows the chart of the xylanolytic activity of *T. harzianum* strain T22 and of *T. reseei* strain 67 grown alone, on B&B70 or lyophilised fungi.

Figure 8 shows the chart of the solubilization of the B&B50 fibre by *T. reseei* strain 67 after 24 hours in the presence of various enzyme concentrations (150 μg/ml, 350 μg/ml, 800 μg/ml). SDF indicates the soluble dietary fibre, IDF indicates the insoluble dietary fibre, TDF indicates the total dietary fibre.

Figure 9 shows the chart of the solubilization of the B&B50 fibre by *T. harzianum* strain T22 after 24 hours in the presence of various enzyme concentrations (150 μg/ml, 350 μg/ml, 800 μg/ml). SDF indicates the soluble dietary fibre, IDF indicates the insoluble dietary fibre, TDF indicates the total dietary fibre.

Figure 10 shows the chart of the solubilization of the B&B70 fibre by *T. reseei* strain 67 between 0 and 24 hours in the presence 120 μg/ml of enzyme. SDF indicates the soluble dietary fibre, IDF indicates the insoluble dietary fibre, TDF indicates the total dietary fibre.

Figure 11 shows the chart of the solubilization of the B&B70 fibre by *T. reseei* strain 67 after 24 hours in the presence of various enzyme concentrations (100 μg/ml, 50 μg/ml, 20 μg/ml).

Figure 12 shows the chart of the solubilization of the B&B70 fibre by *T. reseei* strain 67 after 48 hours in the presence of various enzyme concentrations (100 μg/ml, 50 μg/ml, 20 μg/ml).

Figure 13 shows the chart of the solubilization of the B&B70 fibre by *T. harzianum* strain T22 after 24 hours in the presence of various enzyme concentrations (100 μg/ml, 50 μg/ml, 20 μg/ml).

Figure 14 shows the chart of the solubilization of the B&B70 fibre by *T. harzianum* strain T22 after 48 hours in the presence of various enzyme concentrations (100 μg/ml, 50 μg/ml, 20 μg/ml).

Figure 15 shows the chart of the solubilization of the B&B70 fibre by *T. harzianum* strain T22 after 24 hours in the presence of 50 μg/ml of enzyme.

Figure 16 shows the chart of the solubilization of the B&B70 fibre by *T. harzianum* strain T22 after 24 hours in the presence of 100 μg/ml of enzyme.

Figure 17 shows the results of the antioxidant activity (ABTS method) relative to the solubilization of B&B70 fibre by the enzymes obtained from *T. reseei* strain 67 from 0 to 48 hours.

Figure 18 shows the total polyphenols content relative to the solubilization of B&B70 fibre by the enzymes obtained from *T. reseei* strain 67.

Figure 19 shows the results of the antioxidant activity (ABTS method) relative to the solubilization of B&B70 fibre by the enzymes obtained from *T. harzianum* strain T22 from 0 to 48 hours.

Figure 20 shows the total polyphenols content relative to the solubilization of B&B70 fibre by the enzymes obtained from *T. harzianum* strain T22.

Detailed description of the invention

The present invention shall be further described with reference to some examples of embodiments provided hereinafter for illustrative and nonlimiting purposes.

EXAMPLE 1A

Enzyme production method

Spores of *Trichoderma* species strains, preserved in a 20% glycerol solution and maintained at the temperature of -80°C, were drawn in suitable sterile conditions and spread on PDA culture medium (Potato Dextrose Agar, Merck).

The cultures were incubated at 25°C for seven days until spore formation. The spores were collected by using 10 mL of distilled sterile $H_2O$, and were used for the inoculation or preserved at 4°C. The concentration of the conidia for the inoculation was determined using the Bright-line® (Sigma) particle counter.

Subsequently, flasks containing 1L of Potato Dextrose Broth (PDB) were inoculated with 100μL of a conidia suspension ($1 \times 10^6$/mL) and left for seven days at 25°C with shaking. The biomass produced, collected with the aid of a sieve, was aseptically transferred into 1L of 1X SM (Salt Medium) at pH 6.6 (Harman et *al.,* 1993) containing as carbon source either 1% (v/v) glycerol, 1% (w/v) B&B 70 fibre or 0.5% (w/v) lyophilised fungi.

The composition of the 1X SM (Salt Medium) is shown in Table 2:

Table 2. Composition of 1X SM (Salt Medium)

| Salts | Concentration |
|---|---|
| $KH_2PO_4$ | 680 mg/L |
| $K_2HPO_4$ | 870 mg/L |
| KC1 | 200 mg/L |

(continued)

| Salts | Concentration |
|---|---|
| $NH_4NO_3$ | 1 g/L |
| $FeSO_4$ | 2 mg/L |
| $ZnSO_4$ | 2 mg/L |
| $MnSO_4$ | 2 mg/L |
| $CaCl_2$ | 200 mg/L |
| $MgSO_4$ | 200 mg/L |

In order to favor the growth of the fungal mycelium, the flasks were incubated at the temperature of 25°C with shaking at 150 rpm (rotations per minute). The culture filtrates were collected after 7 days of growth and were subjected to dialysis with distilled water for 48 hours at 4°C, using membranes having a molecular weight cut off of 6-8 kDa. Finally, the dialysed filtrates were concentrated about 1000 times by using the FTS-SYSTEMS freeze-drier (FLEXY-DRY) and preserved at -20°C until their subsequent use. The total protein concentrations in the various culture filtrates were determined with the Bradford assay (Bio Rad). For all the samples, the protein concentrations were standardized.

EXAMPLE 1B

Fibre content determination method

The quantities of soluble fibre (SDF), insoluble fibre (IDF) and total fibre (TDF) were determined by the enzymatic-gravimetric method described by Prosky et *al.* (1998). The procedure carried out comprises two fundamental steps: enzymatic digestion, a step in common in the determination of the total, the soluble and the insoluble fibre, and filtration, which changes depending on the type of fibre to be determined.

1) Enzymatic digestion

1 g of sample is suspended in 40 mL of a 0.05 mM Tris-Mes buffer at pH 8.2 and incubated at 100°C for 35 minutes with 50 μL of α-amylase, with stirring, to achieve the gelatinisation, hydrolysis and the depolymerization of the starch; after 35 minutes, 100 μL of protease are added to the solution, to solubilize and depolymerize the proteins; the solution is incubated at 60°C. Thirty minutes later, the reaction is stopped adding about 5 mL of a 0.546M HCl solution, bringing the pH to values in the range of 4.1-4.8. Finally, 200 μL of amyloglucosidase are added to the solution and incubated at 60°C for 30 minutes, in order to hydrolyse the fragments of the starch to glucose. Subsequently, about 300 mL of warm ethanol (60°C) are added to the hydrolyzed solution and it is left under extraction for an hour to precipitate the soluble fibre and eliminate the depolymerized proteins and the glucose (from starch), for the determination of the total fibre.

2) Filtration

- Total fibre determination

The determination of the total fibre is obtained by filtering the ethanol solution through a filtering system consisting of a crucible in which celite has been previously added for forming a filter, connected with a suction pump. Then, the residue that has deposited on the filter undergoes a series of consecutive washings:

- ■ 3 washings with 25 mL of 78% ethanol
- ■ 2 washings with 10 mL of pure ethanol
- ■ 2 washings with 10 mL of acetone

Each test is carried out in duplicate.

After the washings, the 2 crucibles, in which there is the extracted material, are placed in the oven at 103°C overnight. The morning after the test, the 2 crucibles are weighted by calculating, on the basis of the tare weight of the crucible, the dry residue obtained by elimination of the water. A crucible is subsequently placed in a muffle at 505°C for 5 hours in order to obtain the ash, which is substantially composed of minerals such as calcium, potassium, sodium and phosphates, while the other crucible is used for determining the proteins through the Kjeldhal method.

The total fibre amount is calculated by applying the following formula (I):

$$TDF\% = \frac{[R-(p+A/100)*R]-B}{M*100} \qquad (I)$$

Where: M = weight of the sample; R = weight of the dry residue of M; A = weight of the ash of M; p = weight of the proteins calculated from R; B = blank.

The blank is calculated by applying the following formula (II):

$$B = BR-BP-BA \qquad (II)$$

Where BR = dry residue of the blank; BP = blank proteins; BA = blank ash.

- Determination of the insoluble fibre

The enzymatic digestion process for determining the insoluble fibre fraction corresponds to that described above for the total fibre. The insoluble fibre is however obtained by *directly* filtering the hydrolysed solution and washing the insoluble substance first with 10 mL of deionised water at 60°C, and then carrying out the same washings of the total fibre:

- ■ 3 washings with 25 mL of 78% ethanol
- ■ 2 washings with 10 mL of pure ethanol
- ■ 2 washings with 10 mL of acetone

The subsequent steps completely correspond to those described above for the determination of the total fibre; also the determination of the insoluble fibre amount is obtained by means of the above-shown formula.

- Determination of the soluble fibre

The determination of the soluble fibre fraction is carried out using the liquid fraction recovered following the filtration of the insoluble fibre. The soluble fibre is precipitated by adding 300 mL of warm ethanol at 60 °C. After an hour of extraction, the solution is filtered on previously prepared crucibles. The fraction recovered on the filter of the crucible is washed as follows:

- ■ 3 washings with 25 mL of 78% ethanol
- ■ 2 washings with 10 mL of pure ethanol
- ■ 2 washings with 10 mL of acetone

The subsequent steps correspond to those previously described for the determination of the total fibre.

EXAMPLE 1C

Selection of the strains

In order to evaluate the ability of the *Trichoderma* genus to grow on B&B50 and B&B70 durum wheat bran, different species were assayed and, within the same species, different strains. The results are reported in Table 3.

Table 3. Ability of different fungus species to grow on B&B50 and B&B70

| Species and Strain | B&B50 | B&B70 |
|---|---|---|
| *T. harzianum* T22 | +++ | ++++ |
| *T. harzianum* T24 | ++ | ++ |
| *T. harzianum* T39 | ++ | +++ |
| *T. harzianum* Th6 | + | ++ |
| *T. viride* | +++ | +++ |
| *T. virens* strain G-4 | - | + |
| *T. virens* strain G-6 | + | + |
| *T. virens* strain G-41 | + | + |
| *T. atroviride* strain 11 | ++ | +++ |
| *T. atroviride* strain P1 | +++ | +++ |
| *T. reseei* strain 67 | +++ | ++++ |
| *T. reseei* strain ATCC 5875 | ++ | +++ |
| *T. reseei* strain 62 | ++ | +++ |
| *T. asperellum* strain DAOM230803 | - | - |
| *T. koningii* strain TUB F- 938 | - | + |
| *Botrytis cinerea* | +++ | +++ |

The species *T. harzianum* strain T22, *T. viride, T. atroviride* strain P1, *T. reseei* 67 and *Botrytis cinerea* showed a greater ability to grow on these two substrates. In order to choose the fungal isolate that is the best producer of cellulosolytic, chitinolytic and glucanolytic enzymes, enzyme production tests were carried out on these five fungi.

In this case, as growth and induction substrate, B&B70 was used at a 1% concentration. The culture filtrates obtained after seven days of growth in the induction medium were assayed for the total protein concentrations, as described in example 1A.

The results obtained are shown in Table 4.

Table 4. Total protein production

| Fungus strain | [Proteins]μg/mL |
|---|---|
| *T. viride* | 4.2 |
| *T. atroviride* strain P1 | 7.6 |
| *T. haraianum* strain T22 | 3.8 |
| *T. reseei* strain 67 | 6.2 |
| *Botrytis cinerea* | 2.5 |

On the culture filtrates obtained by growing the different isolates in the presence of B&B70 durum wheat bran, assays were carried out in order to evaluate the glucanolytic and chitinolytic activities. The enzymatic activity of the glucanases is given by the absorbance of the p-nitrophenol released by the enzyme. In figures 1 and 2, are shown the activities of the chitinolytic and glucanolytic enzymes of the culture filtrates obtained by growing the different strains of *Trichoderma* and *Botrytis* on substrates containing 1% fibre. Each absorbance was subtracted from the blank and each sample was read in duplicate. Each assay was carried out in triplicate and was only considered valid if there was color development, following the use of the substrate by the enzyme. From figures 1 and 2, it can be seen that *B. cinerea* produces poor glucanolytic and chitinolytic activities. The culture filtrates obtained from the *T. atroviride* strain P1 and *T. reseei* strain 67 result the best producers of glucanolytic enzymes, while those obtained from the *T. viride* show a low glucanolytic activity. Finally, there is modest glucanolytic activity of the culture filtrate obtained from the *T. harzianum* strain T22. In figure 2, the data relative to the N-acetylglucosaminidase activity is reported. In this case, the T22 strain of *T. harzianum* produced the highest quantity of enzymes, followed by *T. reseei* strain 67. The N-acetylglucosaminidase activities produced by *T. atroviride* strain P1 and by *T. viride* were significant. Once again, B. *cinerea* did not produce a considerable enzymatic activity.

EXAMPLE 2

Fibre solubilization screening

Subsequently, a screening was carried out on these five fungi in order to evaluate their different ability to solubilize the fibre. The test was carried out by subjecting the B&B50 durum wheat bran to enzymatic digestion with 300 μg/ml of total protein at 25°C for 24h.

The results are shown in Table 5:

Table 5. Results of the fibre solubilization screening

| Sample | % Total Fibre | % Insoluble Fibre | % Soluble Fibre |
|---|---|---|---|
| Control | 47.3 | 43.2 | 4.1 |
| *T. harzianum* strain T22 | 37.7 | 30.5 | 5.2 |
| *T. viride* | 46.0 | 43.0 | 3.0 |
| *B. cinerea* | 41.0 | 38.2 | 2.8 |
| *T. atroviride* strain P1 | 46.0 | 42.5 | 3.5 |
| *T. reseei* strain 67 | 36.3 | 30.2 | 6.1 |

The results stated in table 5 show that the most effective strains in the fibre solubilization activity are the *T. harzianum* strain T22 and the *T. reseei* strain 67.

On the basis of the results attained up to now

- on the ability to grow by using the durum wheat fibre as substrate
- on the protein production
- on the enzymatic activities expressed in solution
- on the ability of increasing the soluble fibre the strains *T. harzianum* strain T22 and *T. reseei* strain 67 were selected for carrying out the subsequent assays.

By means of SDS-PAGE (Figure 3), it was possible to show how the production of specific proteins was induced by the substrate. In fact, it is clear from the electrophoretic profile (Figure 3: electrophoretic lanes Nos. 6 and 7) that if B&B70 is supplied to the fungus as carbon source, it will produce a greater quantity and variety of proteins than that which it can produce if its only carbon source is glycerol (figure 3: electrophoretic lanes Nos. 2 and No. 3).

EXAMPLE 3

Enzyme activity assays

At this point, the culture filtrates of the *T. harzianum* strain T22 and *T. reseei* strain 67 were produced in greater quantities (about 3 litres). In this case, the aim was to clarify the actual role of the fibre during the production step of the fungus. For this reason, the two strains were grown, in the presence of B&B70 durum wheat bran and in the presence of other carbon sources. Since the preliminary results already suggested a considerable ability of the different fibre preparations for inducing the production of lytic enzymes, a derivative referred to as "high fibre" (B&BHF) was tested alongside the B&B70 product.

After collection, dialysis and lyophilisation, the different culture filtrates were once again assayed for the production of cellulosolytic enzymes, in particular cellulases, glucanases and xylanases.

EXAMPLE 3A

Cellulosolytic activity

In figures 4 and 5, the cellulosolytic activity is reported of the culture filtrates of *T. reseei* strain 67 and *T. harzianum* strain T22 grown on B&B70 and B&BHF durum wheat fibre, lyophilised fungi and glycerol. The strains grown in 1% glycerol represent the negative controls. The cellulosolytic activity of the isolate of *T. reseei* strain 67 is practically the same in the culture filtrate obtained with the fibre (B&B70 and B&BHF) as with lyophilised fungi, while it is nearly zero in 1% glycerol. Also for the *T. harzianum* strain T22, a significant cellulosolytic activity was only found in the culture filtrates obtained with lyophilised fungi and fibre, and this was, total protein concentration being equal, higher on average than that of *T. reseei* strain 67 in the same conditions.

EXAMPLE 3B

1,3 β-glucanase activity

In figure 6 are reported the results of the assay for the 1,3 β-glucanase activity, evaluated by determining the quantity of reducing groups released by the enzymatic activity on laminarine, a glucose polymer having β-1,3 bonds. The data confirms that the culture filtrates obtained with the B&B70 durum wheat bran have an improved enzymatic activity with respect to the control, i.e. with respect to *T. reseei* strain 67 and *T. harzianum* strain T22 grown in 1% glycerol and also with respect to the medium with 0.5% lyophilised fungi. In all three cases (glycerol, fibre and lyophilised fungi), the *T. reseei* strain 67 exhibited greater activity than the *T. harzianum* strain T22.

EXAMPLE 3C

Xylanolytic activity

In order to evaluate the xylanolytic activity, the culture filtrates of the two selected strains were grown on B&B70 and lyophilised fungi. The same strains grown on glycerol were taken as negative controls. Figure 7 shows how, once again, the fibre has proven to be an optimal induction substrate; in fact, in the case of *Trichoderma reseei* strain 67 there is an activity of 75 mU/assay while *Trichoderma harzianum* strain T22 has an activity of 90 mU/assay. The same strains stimulated instead with lyophilised fungi produced low activity, equal to 5 mU/assay for the *T. reseei* strain 67 and 10 mU/assay for the *T. harzianum* strain T22.

EXAMPLE 4

Solubilization Tests of B&B 50 and 70

The first solubilization tests of the fibre with use of the enzymes produced by the two selected strains were conducted as follows: 1g of fibre (B&B50) was dissolved in a volume of 30 ml of distilled water and a quantity of enzymes of 150μg/mL,350 μg/mL and 800 μg/mL was added. After incubation at 25°C for 24h, the quantities of the total, insoluble, and soluble fibres were determined according to the method by Prosky et *al* (1998). Each test was carried out in triplicate; the control represented by the fibre sample was subjected to the same incubation conditions but no enzymes were added. In tables 6 and 7 is reported the data of the tests carried out with the enzymes of the *T. reseei* strain 67 and the *T. haraianum* strain T22, and in the figures 8 and 9 is shown the progression of the solubilization carried out.

Table 6. B&B50 fibre solubilisation, *T. reseei* strain 67

| B&B50 | | | |
|---|---|---|---|
| | %SDF | %IDF | %TDF |
| CONTROL | 4.1 | 35.2 | 39.3 |

(continued)

| B&B50 | | | |
|---|---|---|---|
| | %SDF | %IDF | %TDF |
| 150μg/mL | 5.1 | 30.6 | 35.7 |
| 350 μg/mL | 5.1 | 27.8 | 32.9 |
| 800 μg/mL | 12.5 | 21.2 | 33.7 |

Table 7. B&B50 fibre solubilisation, *T. harzianum* strain T22

| B&B50 | | | |
|---|---|---|---|
| | %SDF | %IDF | %TDF |
| CONTROL | 4.1 | 35.2 | 39.3 |
| 150μg/mL | 4.7 | 33.7 | 38.4 |
| 350 μg/mL | 5.3 | 31.0 | 36.3 |
| 800 μg/mL | 8.2 | 27.3 | 35.5 |

As the data and figures show, in these first parallel tests there was a progressive increase in the soluble fibre content with the increase in the added enzyme concentration. The best results were obtained with the addition of the greater quantity of enzymes (800 μg/mL) and in particular *T. harzianum* strain T22 underwent a 100% increase in the soluble fibre content (%SDF) compared to the starting value (Control), while the *T. reseei* strain 67 underwent a 205% increase compared to the starting value.

On the basis of these results, the following objective was to reduce the added enzyme quantity and to monitor the solubilization of the fibre starting from systems having a low water activity. These two requirements responded to the need to optimise the hydrolysis in more advantageous conditions for a possible industrial scale use. In fact, both adding enzymes in a relatively high ratio to the substrate, and using large quantities of water during the digestion step were deemed disadvantageous for the practical application of the results of the research. In addition, it was decided to further investigate on the studies on B&B70, which having a very low soluble fibre percentage could more significantly benefit from the enzymatic digestion.

The tests below were carried out as follows: 1g of fibre (B&B70) was dispersed in a volume of 3mL of distilled water and a quantity of 120 μg/mL of enzymes obtained from the strain 67 of *T. reseei* equal was added. After incubation at 25°C for 12 and 24 hours, the total, insoluble and soluble fibre quantities were determined according to the method by Prosky et *al* (1998). Each test was carried out in triplicate; the control is represented by the fibre sample subjected to the same incubation conditions but without added enzymes.

In table 8 are shown the data relative to the test carried out with the enzymes of strain 67 and in figure 10 is shown the progression of the solubilization carried out.

Table 8. B&B70 fibre solubilization, *T. reseei* strain 67

| | %SDF | %IDF | %TDF |
|---|---|---|---|
| CONTROL | 4.3 | 61.2 | 65.4 |
| 12h | 5.8 | 59.2 | 65.1 |
| 24h | 4.4 | 55.8 | 60.2 |

As can be seen from the data and from the progression of the solubilization, such system with low water activity did not result effective, since after 24 hours a lower solubilization is obtained compared to that found after 12 hours; without wishing to be bound to any theory, it is deemed that in such conditions, the enzymatic activity is negatively affected by the high capability to retain water of the fibre. In practice, the water retained by the fibre would not allow the enzyme to move freely in solution, and thus to arrive at the cleavage sites.

At this point, the low water activity system was modified by doubling the quantity of water. Therefore, 1g of fibre (B&B70) was dissolved in a volume of 6mL of distilled water and a quantity of 100 μg/mL, 50 μg/mL and 20 μg/mL of enzymes obtained from the strain 67 of *T. reseei* was added. After incubation at 25°C for 24 and 48 hours, the total, insoluble and soluble fibre quantities were determined according to the method by Prosky et *al.* (1998). Each test was carried out in triplicate; the control was represented by the fibre sample subjected to the same incubation conditions but without the addition of enzymes. In table 9 is shown the data of the test carried out with the enzymes of the *T. reseei* strain 67 and in figure 11 is shown the progression of the solubilisation carried out after 24 hours.

Table 9. B&B70 fibre solubilization, *T. reseei* strain 67 after 24 hours

| | %SDF | %IDF | %TDF |
|---|---|---|---|
| CONTROL | 2.2 | 57.3 | 59.6 |
| 100μg/mL | 5.2 | 52.2 | 58.8 |
| 50 μg/mL | 2.9 | 52.0 | 56.6 |
| 20 μg/mL | 2.7 | 54.4 | 59.5 |

Table 10 shows the data of the test carried out with the enzymes of *T. reseei* strain 67, and figure 12 shows the progression of the solubilisation after 48 hours.

Table 10. B&B70 fibre solubilization, *T. reseei* strain 67 after 48 hours

| | %SDF | %IDF | %TDF |
|---|---|---|---|
| CONTROL | 2.2 | 57.3 | 59.6 |
| 100μg/mL | 6.2 | 51.8 | 58.0 |
| 50 μg/mL | 3.5 | 53.0 | 56.5 |
| 20 μg/mL | 3.0 | 53.3 | 56.3 |

From the obtained data, also in this case one finds a solubilization of the fibre that is greater where higher quantities of enzymes were added; surely in this case the low water activity system employed proves effective. By using an enzyme concentration of 100μg/mL, after 24 hours there is a 138% increase in the soluble fibre content compared to the starting value, while after 48 hours a 186% increase compared to the starting value is obtained. The test was likewise conducted on *T. harzianum,* thus 1g of fibre (B&B70) was dissolved in a volume of 6mL of distilled water and a quantity of 100μg/mL, 50μg/mL and 20μg/mL of enzymes obtained from the strain T22 of *T. harzianum* was added. After incubation at 25°C for 24 and 48 hours, the total, insoluble and soluble fibre quantities were determined according to the method by Prosky et *al.* (1998). Each test was carried out in triplicate; the control was represented by the fibre sample subjected to the same incubation conditions but without the addition of enzymes. Table 11 shows the data of the test carried out with the enzymes of the *T. harzianum* strain T22 and figure 13 shows the progression of the solubilization carried out after 24 hours.

Table 11. B&B70 fibre solubilization, *T. harzianum* strain T22 after 24 hours

| | %SDF | %IDF | %TDF |
|---|---|---|---|
| CONTROL | 2.2 | 57.3 | 59.6 |
| 100μg/mL | 6.8 | 52 | 58.8 |
| 50 μg/mL | 3.9 | 53.2 | 57.1 |
| 20 μg/mL | 3.0 | 53.6 | 56.6 |

Shown in table 12 is the data of the test performed with the enzymes of the strain *T. harzianum* T22 and figure 14 shows the progression of the solubilization carried out after 48 hours.

Table 12. B&B70 fibre solubilization, *T. haraianum* strain T22 after 48 hours

| | %SDF | %IDF | %TDF |
|---|---|---|---|
| CONTROL | 2.2 | 57.3 | 59.6 |
| 100ug/mL | 6.9 | 52.3 | 59.2 |

(continued)

| | %SDF | %IDF | %TDF |
|---|---|---|---|
| 50 μg/mL | 3.9 | 53.2 | 57.1 |
| 20 μg/mL | 3.1 | 53.7 | 56.8 |

From the data obtained, also in this case the solubilization of the fibre is found to be greater where higher quantities of enzymes were added. In fact, using an enzyme concentration of 100μg/mL after 24 hours, a 213% increase in the soluble fibre content can be observed compared to the starting value, while after 48 hours a 218% increase is observed compared to the starting value. In this case, *T. harzianum* proved to be more efficient than *T. reseei,* even if for both the extension of the enzymatic digestion activity to 48 hours does not prove effective, since the increases in the soluble fibre content are not proportional.

By further increasing the quantity of distilled water in which to suspend the fibre, a solubilization test was carried out as follows: 1g of fibre (B&B70) was dissolved in a volume of 15mL of distilled water and a quantity of 5μg/mL of enzymes obtained from the strain T22 of *T. harzianum* was added. After incubation at 25°C for 24 hours, the total, insoluble and soluble fibre quantities were determined according to the method by Prosky *et al.* (1998). Each test was carried out in triplicate; the control was represented by the fibre sample subjected to the same incubation conditions but without the addition of enzymes. Table 13 shows the data of the test carried out with the enzymes of the *T. harzianum* strain T22 and figure 15 shows the progression of the solubilization carried out after 24 hours.

Table 13. B&B70 fibre solubilization, *T. harzianum* strain T22 after 24 hours

| | %SDF | %IDF | %TDF |
|---|---|---|---|
| CONTROL | 2.2 | 57.3 | 59.6 |
| 50 μg/mL | 8.3 | 49.6 | 57.9 |

From the obtained data, the increase in the soluble fibre content is of 280% compared to the starting value.

Then, the same test was carried out by increasing the quantity of added enzymes. The test was carried out as follows: 1g of fibre (B&B70) was dissolved in a volume of 15mL of distilled water and a quantity of 100μg/mL of enzymes obtained from the strain T22 of *T. harzianum* was added. After incubation at 25°C for 24 hours, the total, insoluble and soluble fibre quantities were determined according to the method by Prosky et *al.* (1998). Each test was carried out in triplicate; the control was represented by the fibre sample subjected to the same incubation conditions but without the addition of enzymes. Table 14 shows the data of the test carried out with the enzymes of the *T. harzianum* strain T22 and figure 16 shows the progression of the solubilization carried out after 24 hours.

Table 14. B&B70 fibre solubilization, *T. harzianum* strain T22 after 24 hours

| | %SDF | %IDF | %TDF |
|---|---|---|---|
| CONTROL | 2.2 | 57.3 | 59.6 |
| 100 μg/mL | 8.1 | 49.9 | 58.0 |

It is observed from the data that there is no difference between the previous test (50μg/mL) and this one, in fact, the increase in the soluble fibre is of about 280% compared to the starting value.

EXAMPLE 5

Determination of the antioxidant activity

The antioxidant activity was determined by means of two different techniques, referred to for the sake of brevity as the ABTS method and the Folin-Ciocalteus method (Singleton et *al.,* 1965); the first studies the lipophilic antioxidant activity while the second determines the total polyphenols content.

EXAMPLE 5A

ABTS method

The ABTS method (Miller et *al.,* 1995; Miller *et al.,* 1997 b; Pellegrini et *al.,* 1999: Rice-Evans et *al.,* 1997)), evaluates the formation of a colored compound whose absorbance maximum is at 734 nm. The method is based on the use of the chromogen 2,2'azinobis(3-ethylbenzothiazoline-6-sulfonate) which in radical form produces a typical absorption at 734 nm. The antioxidant activity is calculated as a reduction of the absorbance of the radical cation of the ABTS in the presence of molecules with more affinity for the singlet electron, antioxidant substances (AO).

$$ABTS^{+} \text{ colored radical} + AO \Rightarrow ABTS \text{ decolorised radical} + AO \text{ radical}$$

The reaction equilibrium is shifted towards the decolorised radical cation proportional to the antioxidant activity of the sample being tested. Based on this, the antioxidant activity can be expressed as an absorbance decrease percentage, defined as inhibition percentage, calculated according to the following equation (III):

$$Abs734\ (\%) = (1 - Absc\ /\ Absb) \times 100 \quad (III)$$

where Absc is the absorbance of the radical cation after the addition of the solution containing the antioxidants, while the Absb is the absorbance of the blank, i.e. of the radical cation after the addition of only ethanol, used for obtaining the absorbance of the solution prepared with the uninhibited chromogen.

Preparation of the sample

After enzymatic digestion, the sample of B&B70 was subjected to centrifugation at 4000 rev/min at 4°C controlled temperature for 5 minutes; the supernatant was then drawn out. 5 mL of methanol was then added to the pellet, and it was subsequently subjected to centrifugation at 4000 rev/minute at 4°C controlled temperature for 5 minutes, the supernatant was then drawn out. After having added another 5mL of methanol, the previous procedure was repeated. The supernatant recovered after the second centrifugation was added to the first.. Finally, the entire supernatant was filtered with 0.45 μm Millipore Millex-HA nylon filters. The assay was carried out in triplicate.

Preparation of the solution containing the radical species.

The preparation of the radical cation ABTS was carried out by adding to 19.2 mg of the diammonium salt of 2,2'azinobis(3-ethylbenzothiazoline-6-sulfonate) (ABTS), 5 mL of HPLC grade water, obtaining a final concentration of 7mM. To this solution, 88 μL of a 140mM potassium persulphate aqueous solution were added, and the preparation obtained was kept at 4°C in the dark for at least 6 hours, so as to reach a stable absorbance value at 734nm. Finally, the chromogen used for the reaction is obtained by diluting such preparation with ethanol, in an approximately 1:88 ratio, which will show an absorbance of about 0.700±0.100nm. The solution for the assay was prepared as follows: to 1 mL of chromogen, 100μl of suitably diluted sample according to the values of the calibration line carried out was added. Every sample is tested in triplicate and the optical reading is carried out after 2.5 minutes from the preparation of the samples. The blank was prepared with 1 mL of chromogen and 100 μL of ethanol. A calibration curve was obtained by using the TROLOX, a water-soluble analogue of α-tocopherol. The calibration line used in this study has equation (IV):

$$y = 4.6535\ x + 4.5715 \quad R^2 = 0.99 \quad (IV)$$

EXAMPLE 5B

Folin-Ciocalteus Method

After enzymatic digestion, the sample of B&B70 was subjected to centrifugation at 4000 rev/minute at 4°C controlled temperature for 5 minutes; the supernatant was then drawn out. The latter was suitably diluted according to the calibration line carried out.

Preparation of the sample

To 125 μL of Folin reagent, 500 μL of distilled water and 125 μL of previously diluted sample were added. After 6 minutes, 1.25 mL of 7.5% $Na_2CO_3$ were added. After 90 minutes, a spectrophotometer reading was conducted at 760 nm. Each sample was prepared and read in the spectrophotometer in triplicate.
For the quantification of the polyphenols, a calibration curve was used, obtained by using gallic acid as reference standard; it has equation (V):

$$y = 9.9446x \qquad R^2 = 0.99 \text{ (V)}$$

EXAMPLE 6

On the samples of B&B70 after the enzymatic digestion, the antioxidant activity and total polyphenol content was determined for calculating the possible increase in both. In order to assess the lipophilic antioxidant activity, the ABTS method was used, while for assessing the total polyphenol content, the Folin-Ciocalteus method was used.

EXAMPLE 6A

Antioxidant activity

Antioxidant activity of B&B70 after enzymatic digestion by enzymes derived from *Trichoderma reseei* strain 67.
1g of B&B70 fibre was dissolved in a 15 mL volume of distilled water and a quantity of 50μg/mL of enzymes derived from *Trichoderma reseei* strain 67 was added. The enzymatic digestion was carried out at 25°C for 24 and 48 hours. After such time, the samples were assayed for antioxidant activity and for the total polyphenol content. Figures 17 and 18 show the results obtained.
The time defined "t0" indicates the sample of B&B70 with no added enzymes and not subjected to incubation. As the figures show, both the antioxidant activity and the total polyphenol content increase as a function of time. In particular, a greater increase in the antioxidant activity of the aqueous fraction occurs, at the same rate as the polyphenol content increase.

EXAMPLE 6B

Antioxidant activity of B&B70 after enzymatic digestion by enzymes derived from *Trichoderma harzianum* strain T22

1g of B&B70 fibre was dissolved in a 15 mL volume of distilled water and a quantity of 50μg/mL of enzymes derived from *Trichoderma harzianum* strain T22 was added. The enzymatic digestion was carried out at 25°C for 24 and 48 hours. After such time, the samples were assayed for antioxidant activity and for the total polyphenol content. Figures 19 and 20 show the results obtained.
The time defined "t0" indicates the sample of B&B70 with no added enzymes and not subjected to incubation. As the figures show, both the antioxidant activity and the total polyphenol content increase as a function of time. In particular, a greater increase of the antioxidant activity of the aqueous fraction occurs, at the same rate as the polyphenol content increase.

EXAMPLE 7

Sensory evaluation test

In order to evaluate whether the addition of the enzymes to the B&B70 fibre has modified its original sensory parameters, a sensory test was carried out regarding the color and odor. The test was carried out as follows: 25 people were presented with the B&B70 sample dispersed in 15 mL of distilled water, in order to have them memorise its color. Then, each person received 2 non-labelled samples: the fibre sample not treated with the enzymes and the fibre sample after enzymatic digestion. Each person expressed his opinion by answering the question: is there a difference in color compared to the starting sample? From the results obtained, 92% of the people found no difference in color, while 8% found variations in color.
Likewise, any appearance of *off-flavours,* following the enzymatic digestion of the B&B70 fibre was evaluated. The test was carried out as follows: 25 people were presented with the sample of B&B70 dispersed in 15 mL of distilled water, in order to have them memorise its odor. Then, each person received 2 non-labelled samples: the fibre sample not treated with the enzymes and the fibre sample after enzymatic digestion. Each person expressed his opinion by answering to the question: is there a difference in odor with respect to the starting sample? From the results obtained, 88% of the people found no difference, while only 12% found variations in odor.

The results obtained have shown that it is possible to achieve, on an industrial scale, a percentage of soluble fibre ranging between 7 and 8% of the bran with an increase of over 200% in the soluble fibre, a result not obtainable with physical or chemical methods.

The same tests were carried out not only for B&B70, but also to increase the soluble fibre level of the B&B50 bran. The B&B50 bran in fact proved itself to be potentially just as suitable, with soluble fibre yields that were also close to 200%.

The composition of dietary fibre which is obtained by means of the method of the present invention has significant prebiotic properties. A qualitative evaluation index of the potential prebiotic value of indigestible carbohydrates is represented by the "prebiotic index", expressed as (Palframan et *al.,* 2003; Manderson et *al.* 2005):

$$\text{Prebiotic index} = \Delta BIF + \Delta LAC - \Delta BAC - \Delta CLOS$$

where the terms represent the variation before and after the exposure of the reference microbial species populations such as Bifidobacteria (BIF), Lactobacilli (LAC), Bacteroides (BAC) and Clostridi (CLOS) to the carbohydrates under examination.

The effect of the B&B70 bran on the equilibrium of the intestinal microflora before and after the enzymatic treatment of the present invention was studied in *vitro* with the use of a specific and suitable "gut model". It was experimentally found how the prebiotic index of the B&B70 bran goes from negative values to positive values after the enzymatic treatment.

The results have also demonstrated that after the hydrolysis, there is an increase in the water-soluble antioxidant activity, coupled with an increase in the phenol compounds extractible in water.

This also, like the increase in the soluble fibre, is an effect of the enzymes on the polysaccharide structures of the bran. The attacking action and the consequent cleavage (lysis) of the polysaccharide chains carried out by the enzymes involves the freeing of the polyphenol compounds (especially ferulic acid and/or dehydroferulic acid) originally bonded thereto, detectable by the increase in their concentration and by the increase in the antioxidant activity ascribable thereto.

Finally, the hydrolysis procedure does not alter, in a macroscopic manner, the organoleptic characteristics of the product. Therefore, the final product will better meet the taste and preferences of the consumer.

BIBLIOGRAPHY

Alexander, C. (2007). Two for the price of one: antioxidant dietary fibre, Food Engineering & Ingredients, Apr/May 2007, Vol. 32, Issue 1, 18-19. Ang J.F. (2001). Powdered cellulose and the development of new generation healthier foods. Cereals Foods World, March 2001, Vol. 46, No 3, 107- 111.

American Association of Cereal Chemists (AACC), Cereal Food World, 46, (2001) 112-129.

Cummings J.H, M.J. Hill, T. Jivraj, H. Houston, W.J. Branch, & D.J.A. Jenkins (1979). The effect of meat protein and dietary fiber on colonic function and metabolism I. Changes in bowel habit, bile acid excretion and calcium absorption. American journal of Clinical Nutrition, 32, 2086-2093.

Dietary Fibre Conference (2006). Multifunctional complex of components. Proceedings 12-14/6/2006, Helsinki, Finland, University of Helsinki.

Eveleigh D.E. (1987). Cellulase: a perspective. Philosophical Transanctions of the Royal Society of London, Serie B-Biological Sciences 321:435-447.

Fed. Reg. 2002, 67, 191

Gallaher D., C. A. Hassel, K.J. Lee, C.M Gallaher (1993). Viscosity and fermentability as attributes of dietary fibre responsible for the hypocholesterolemic affect in hamsters. Journal of Nutrition, Vol. 123, No. 2, February 1993, 244-252.

Gurkin S. (2002). Hydrocolloids-Ingredients that add flexibility to tortilla processing. Cereals Foods World, February 2002, Vol. 47, No 2, 41- 43.

Harman, G. E., C. K. Hayes, M. Lorito, R.M. Broadway, A. Di Pietro, C. Peterbauer, A. Tronsmo (1993). Chitinolytic enzymes of Trichoderma harzianum: purification of chitobiosidase and endochitinase. Phytopathology, 83, 213-318.

Inglett G.E. (1997). Development of a dietary fiber gel for calorie-reduced foods. Cereals Foods World, May 1997, Vol. 42, No 5, 382-385.

Mandels M. and R.E. Andreotti (1978). Problems and challenges in the cellulose to cellulase fermentation. Process Biochemistry 13:6-13.

Manderson K., M. Pinart, K. M. Tuohy, W. E. Grace, A. T. Hotchkiss, W. Widmer, M. P. Yadhav, G. R. Gibson, and R. A. Rastall (2005). In Vitro Determination of prebiotic properties of oligosaccharides derived from an orange juice manufacturing by-product stream. Applied and Environmental Microbiology, December 2005, 8383-8389, Vol. 71, No. 12.

Miller J.N., A.T. Diplock, C.A. Rice Evans (1995). Evaluation of the total antioxidant activity as a market of deterioration of apple juice on storage. J. Agric. Food Chem., 43, 1794-1801.

Miller J.N., C.A. Rice Evans (1997 a). Factors influencing the antioxidant activity determined by ABTS radical cation assay. Free radical Res., 26, 195-199.

Miller J.N., C.A. Rice Evans (1997 b). The relative contributions of ascorbic acid and phenolic antioxidants to the total antioxidant activity of orange and apple fruit juice and blackcurrant drink. Food Chem. 60, 331-337.

Nevalainen K.M.H., E.T. Palva and M.J. Bailey (1980). A high cellulase producing mutant strain of Trichoderma reseei. Enzyme and Microbial Technology 2:59-60.

Palframan R., G. R. Gibson, and R. A. Rastall (2003). Development of a quantitative tool for the comparison of the prebiotic effect of dietary oligosaccharides. Lett. Appl. Microbiol. 37, 281-284.

Pellegrini N., M. Yang and C.A. Rice-Evans (1999). Screening of dietary carotenoids and carotenoids-rich fruits extracts for the antioxidant activities applying ABTS radical cation decolorization assay. Methods Enzymol. 299, 379-389.

Prosky L., N.-G. Asp, T.F. Schweizer, J.W. DeVries & I. Furda (1998). Determination of insoluble, soluble and total dietary fibre in food and food products. Interlaboratory study. Journal of Association Official Analytical Chemistry, 71, 1017-1023.

Rice-Evans C.A., Miller, N.J. and Paganga G. (1997) Antioxidant properties of phenolic compounds. Trends in Plant Science, vol. 2, 4, 152-157.

Roberts D., S. Truswell, A. Bencke, H. Drewar and E. Farmakalidis (1994). The cholesterol lowering effects of a breakfast cereal containing psyllium fibre. Med J. 161, 660-664.

Singleton V. L., J.A. Rossi. (1965). Colorimetry and total phenolics with phosphomolybdic-phosphotungstic acid reagents. Am. J. Enol. Vitic., 16, 144-158.

Szengyel Z., G. Zacchi, A. Varga and K. Reczey (2000). Cellulase production of Trichoderma reseei RUT C30 using steam-pretreated spruce. Hydrolytic potential of cellulases on different substrate. Applied Biochemistry and Biotechnology Spring 84-86:679-691.

Velàzquez O.C., H.M. Lederer & J.L. Rombeau (1997). Butyrate and the colonocyte: production, absorption, metabolism and therapeutic implications. In : Dietary Fibre in Health and Disease. (eds D. Kritchevsky,C. Bonfield), pp. 123-134. Plenum Press, New York.

Williams R.D., W.H. Olmstead (1936). The manner in which food controls the bulk of the feces. Annals of Internal Medicine, 10, 717-727.

## Claims

1. Method for the treatment of bran to obtain a dietary fibre composition having an increased soluble fibre content, which comprises the step of subjecting the bran to solubilization in the presence of an enzymatic mixture obtained from a culture of a *Trichoderma* strain, said culture being incubated on a substrate containing at least 1% (w/v) of bran in conditions suitable for the production of lytic enzymes.

2. Method according to claim 1, wherein the bran contained in said substrate is the same as the bran subjected to solubilization.

3. Method according to claim 1 or 2, wherein said *Trichoderma* strain is chosen from among *T. reseei* strain 67 and *T. harzianum* strain T22.

4. Method according to any one of claims 1 to 3, wherein said bran consists of durum wheat bran, preferably_chosen from among the cereal processing by-products referred to as B&B50, B&B70 and their mixtures, wherein B&B50, B&B70 derive from the processing the outer layers of the caryopses, obtained by means of preliminary friction and/or abrasion operations, before the milling of the same is carried out, and whose typical average composition is reported in the following Table:

| | | B&B50 | B&B70 |
|---|---|---|---|
| Component | Unit | Minimum value | Minimum value |
| Moisture | % | 9.50 | 9.50 |
| Proteins (Nx5.70) | % | 15.0 | 7.20 |
| Ash | % | 6.80 | 3.60 |
| Lipids | % | 5.9 | 3.20 |
| Total dietary fibre (TDF) | % | 36.0 | 59.0 |
| Insoluble dietary fibre (IDF) | % | 32.0 | 55.0 |
| Soluble dietary fibre (SDF) | % | 4.0 | 4.0 |

5. Method according to claim 4, wherein said bran is chosen from among B&B70 durum wheat bran, its derivatives and mixtures thereof, preferably B&B70.

6. Method according to any one of the previous claims, wherein said enzymatic mixture contains enzymes chosen from the group which comprises glucanases, xylanases, chitinases and cellulases, preferably endoglucanases and endoxylanases.

7. Method according to any one of the previous claims, wherein said *Trichoderma* strain is grown on a substrate containing about 1% bran (w/v).

8. Method according to any one of the previous claims, wherein the solubilization step comprises the incubation, at a temperature comprised between 20 and 30°C for 12-60 hours, of a reaction mixture comprising bran dispersed in distilled water in a (w/v) ratio variable between 1:2 and 1:40 and enzymatic mixture at a concentration comprised between 0.001 and 0.1 % by weight over the volume of the reaction mixture.

9. Method according to claim 8, wherein said ratio (w/v) of the bran to the distilled water is variable between 1:3 and 1:30.

**10.** Method according to claim 8 or 9, wherein said strain is *T. reseei* strain 67 and said ratio is 1:6.

**11.** Method according to claim 8 or 9, wherein said strain is *T. harzianum* strain T22[1] and said ratio is 1:15.

**12.** Method according to any one of the claims 8 to 11, wherein the concentration of said enzymatic mixture is comprised between 0.005 and 0.08% by weight over the volume of said reaction mixture.

**13.** Method according to claim 12, wherein the concentration of said enzymatic mixture is comprised between 0.005 and 0.01% by weight over the volume of said reaction mixture.

**14.** Method according to any one of claims 8 to 13, wherein said reaction mixture is incubated at 25°C for 24 hours.

**15.** Dietary fibre composition having prebiotic properties which contains a quantity of soluble fibre greater than about 2% by weight over the total dry weight of the total fibre and a polyphenols level of at least about 0.15 measured in mg of gallic acid per 100 g of fibre according to the Folin-Ciocalteus method, obtainable by the method of any one of claims 1 to 14.

**16.** Dietary fibre composition having prebiotic properties according to claim 15, wherein the quantity of soluble fibre is comprised between about 3 and about 13% by weight over the total weight of the total fibre and the polyphenols level is of at least about 0.30 measured in mg of gallic acid per 100 g of fibre according to the Folin-Ciocalteus method.

**17.** Dietary fibre composition according to claim 16, wherein the quantity of soluble fibre is comprised between about 7 and about 8% by weight over the total weight of the total fibre.

**18.** Functional food product having prebiotic properties comprising the dietary fibre composition according to any one of claims 15 to 17.

**19.** Functional food product having prebiotic properties according to claim 18, wherein said food product is pasta, bakery products, breakfast cereals, a snack or a drink.

**20.** Use of the dietary fibre composition according to any one of claims 15 to 17 for the preparation of functional food products of the type chosen from among: pasta, bakery products, breakfast cereals, a snack or a drink.

Figure 1

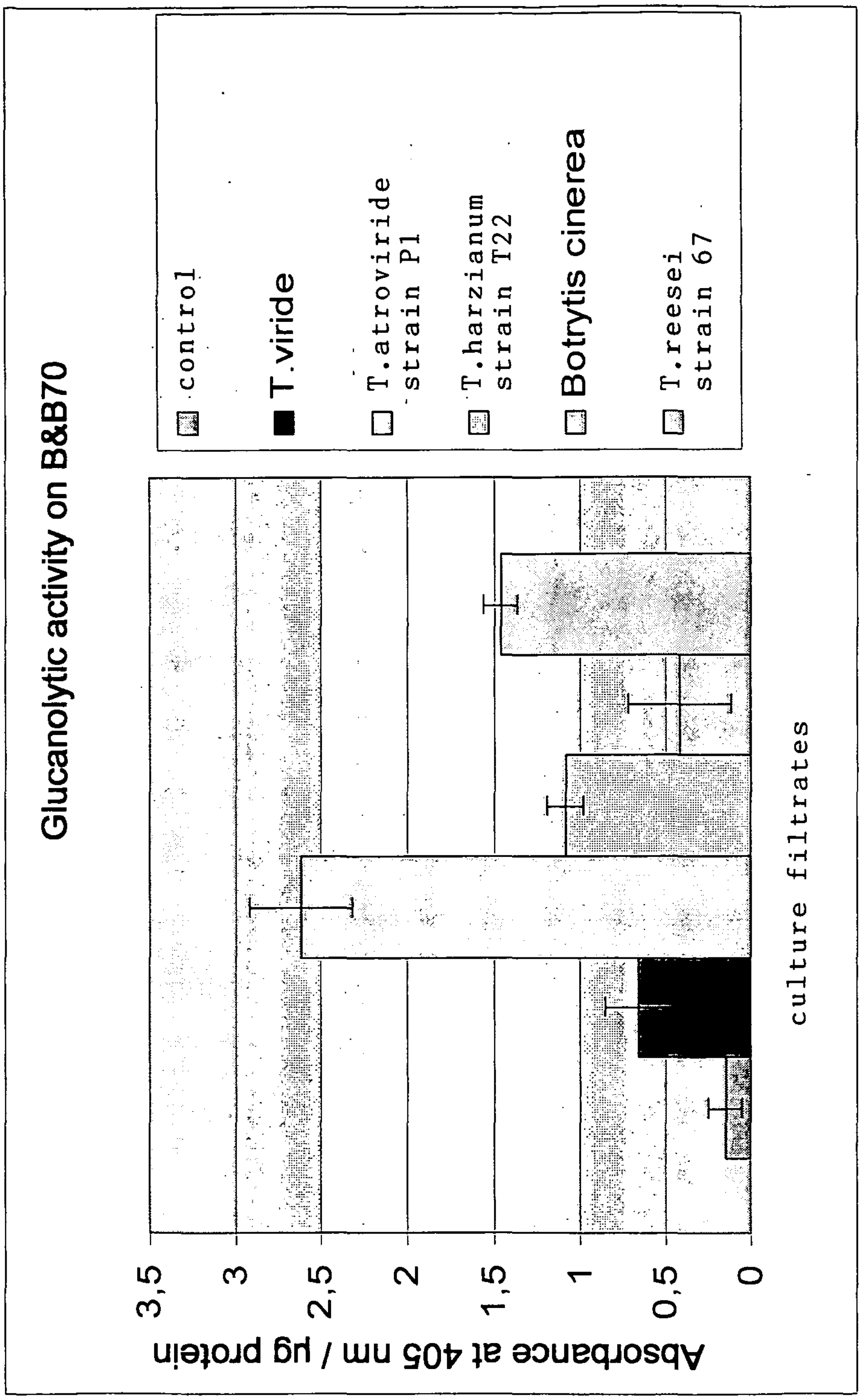
Glucanolytic activity on B&B70
Absorbance at 405 nm / µg protein
3,5
3
2,5
2
1,5
1
0,5
0
culture filtrates
control
T.viride
T.atroviride strain P1
T.harzianum strain T22
Botrytis cinerea
T.reesei strain 67

Figure 2

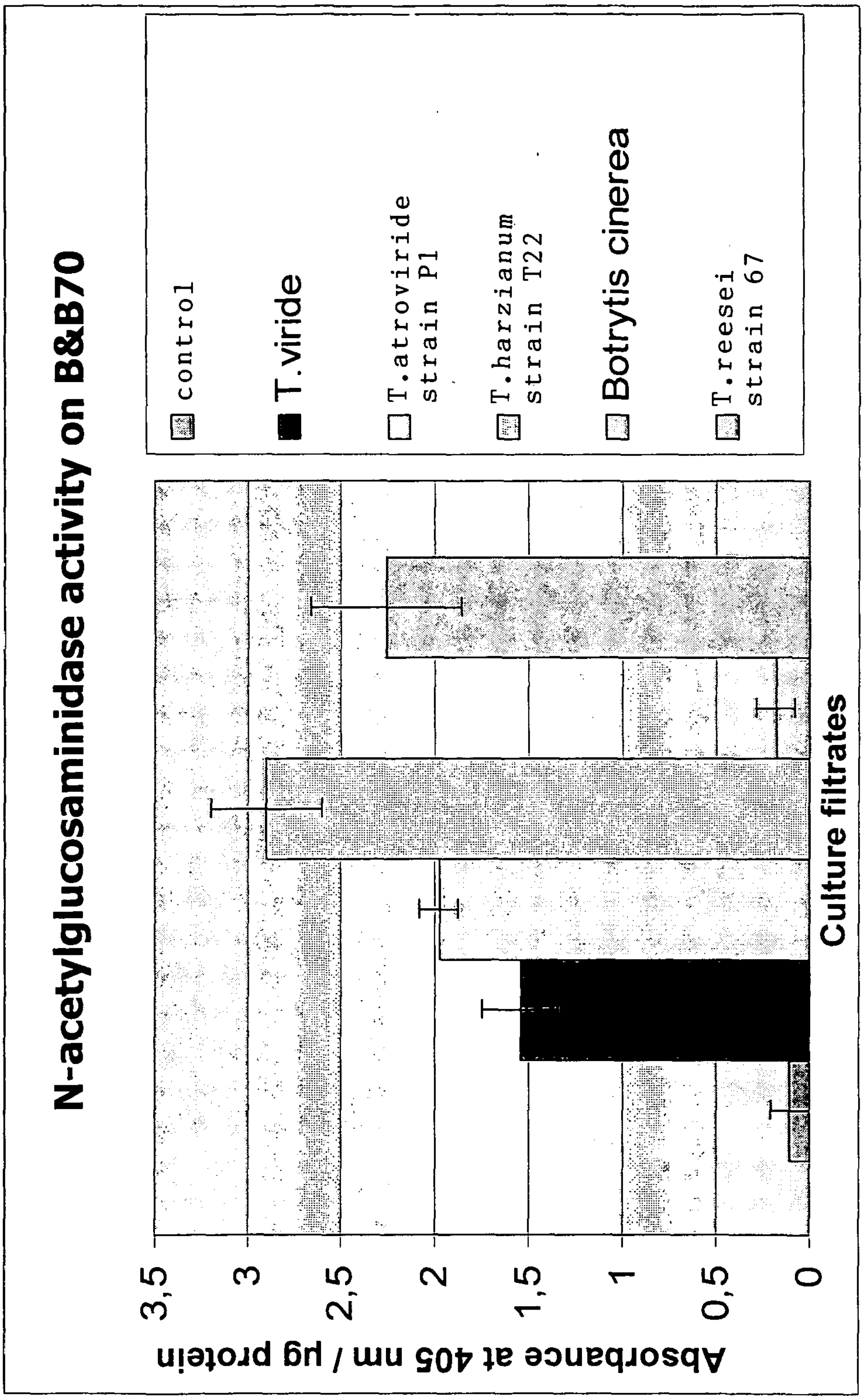
N-acetylglucosaminidase activity on B&B70
Absorbance at 405 nm / µg protein
3,5
3
2,5
2
1,5
1
0,5
0
Culture filtrates
control
T.viride
T.atroviride strain P1
T.harzianum strain T22
Botrytis cinerea
T.reesei strain 67

Figure 3.

SDS-PAGE strains *T. harzianum* strain T22 and *T. reseei* strain 67

SDS PAGE

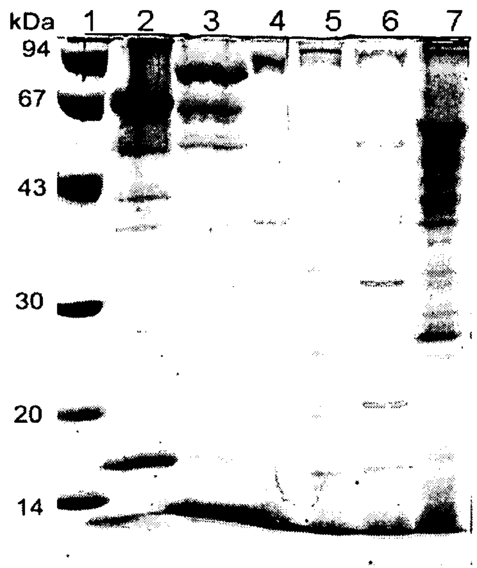


1. STANDARD
2. T22 + GLYCEROL
3. 67 + GLYCEROL
4. T22 + LYOPHILISED FUNGI
5. 67 + LYOPHILISED FUNGI
6. T22 + B&B70
7. 67 + B&B70

Figure 4

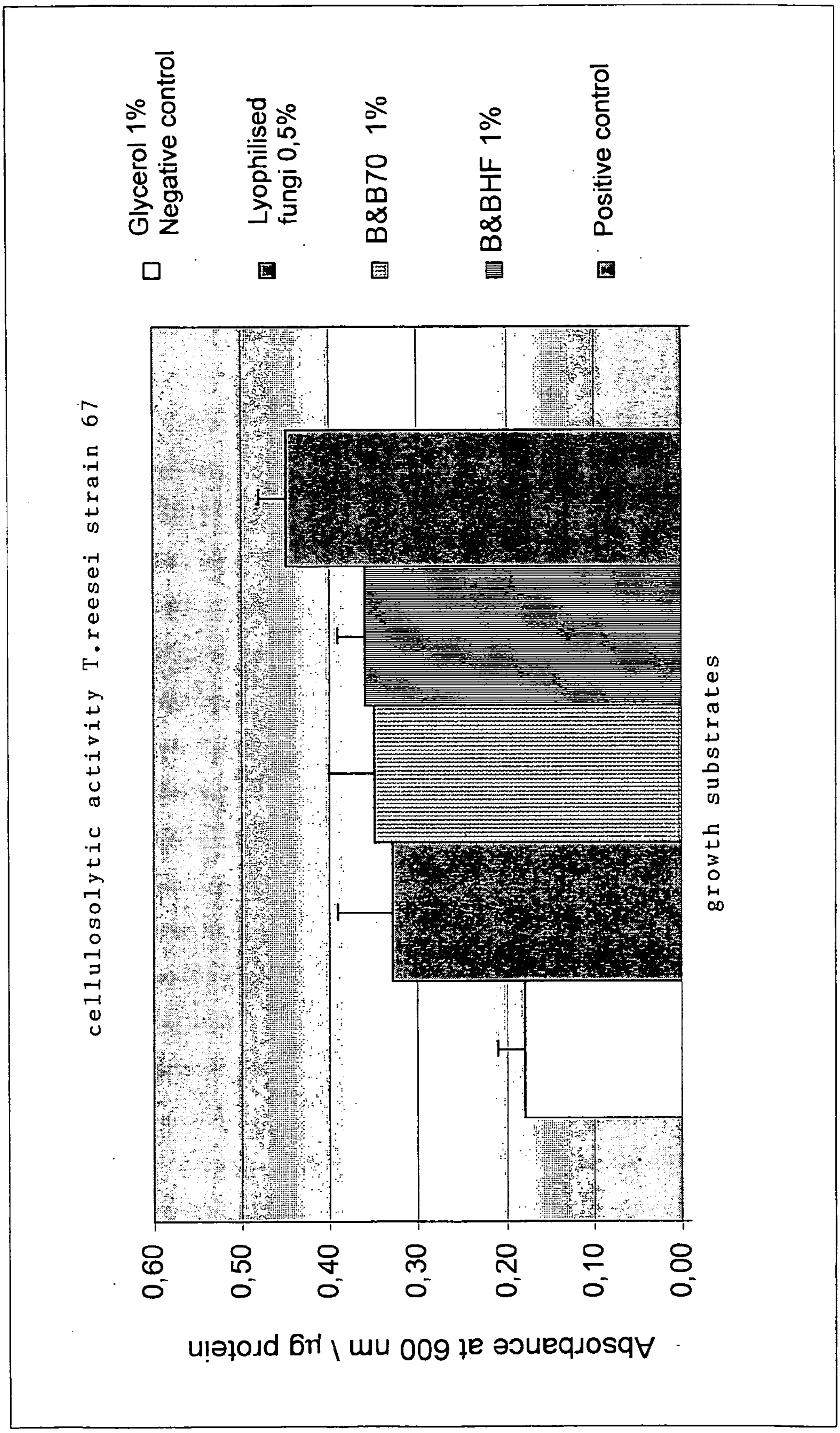
cellulosolytic activity T.reesei strain 67
Absorbance at 600 nm \ µg protein
0,60
0,50
0,40
0,30
0,20
0,10
0,00
growth substrates
Glycerol 1% Negative control
Lyophilised fungi 0,5%
B&B70 1%
B&BHF 1%
Positive control

Figure 5

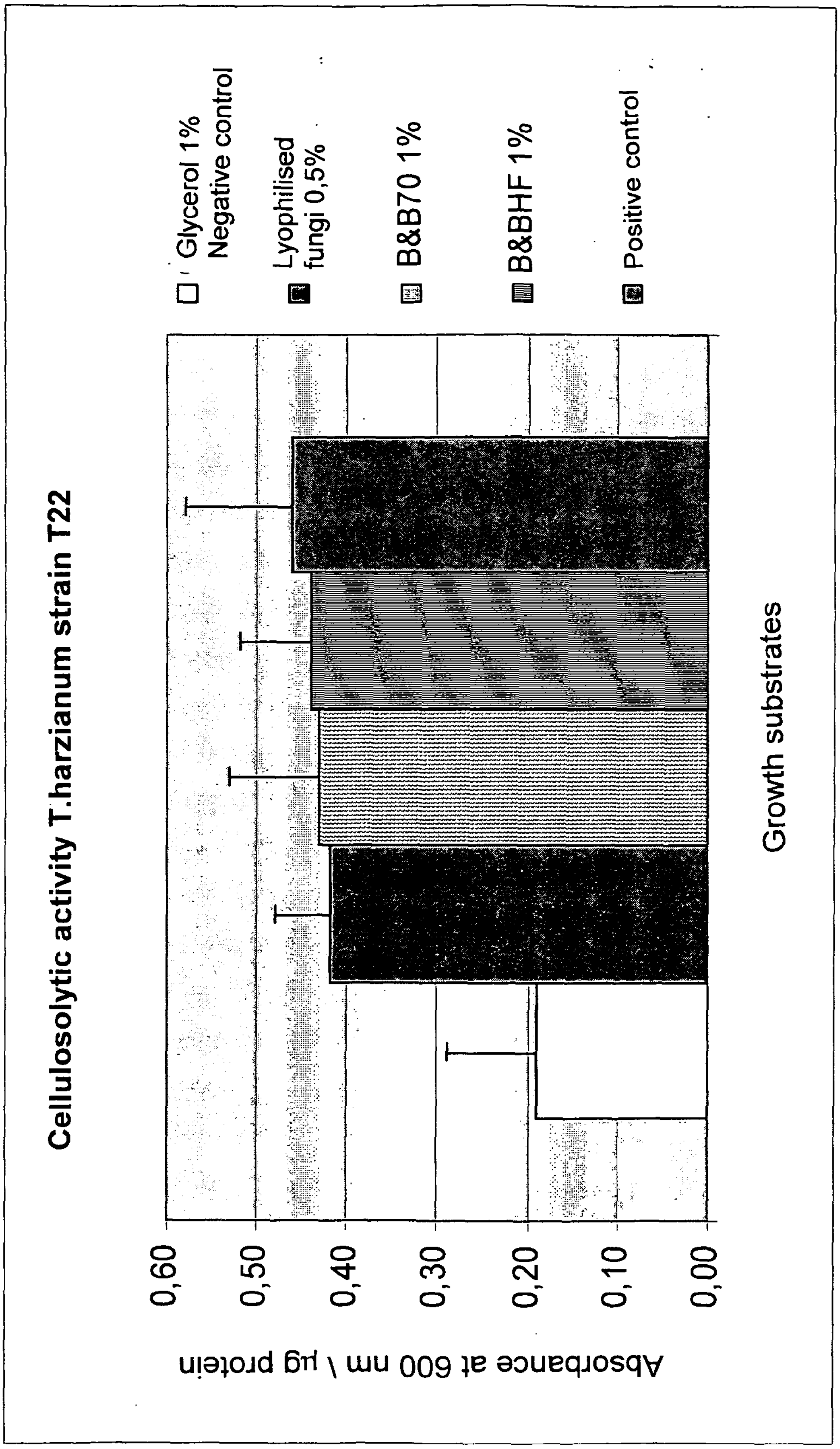
Cellulosolytic activity T.harzianum strain T22
Absorbance at 600 nm \ µg protein
0,60
0,50
0,40
0,30
0,20
0,10
0,00
Growth substrates
Glycerol 1% Negative control
Lyophilised fungi 0,5%
B&B70 1%
B&BHF 1%
Positive control

Figure 6

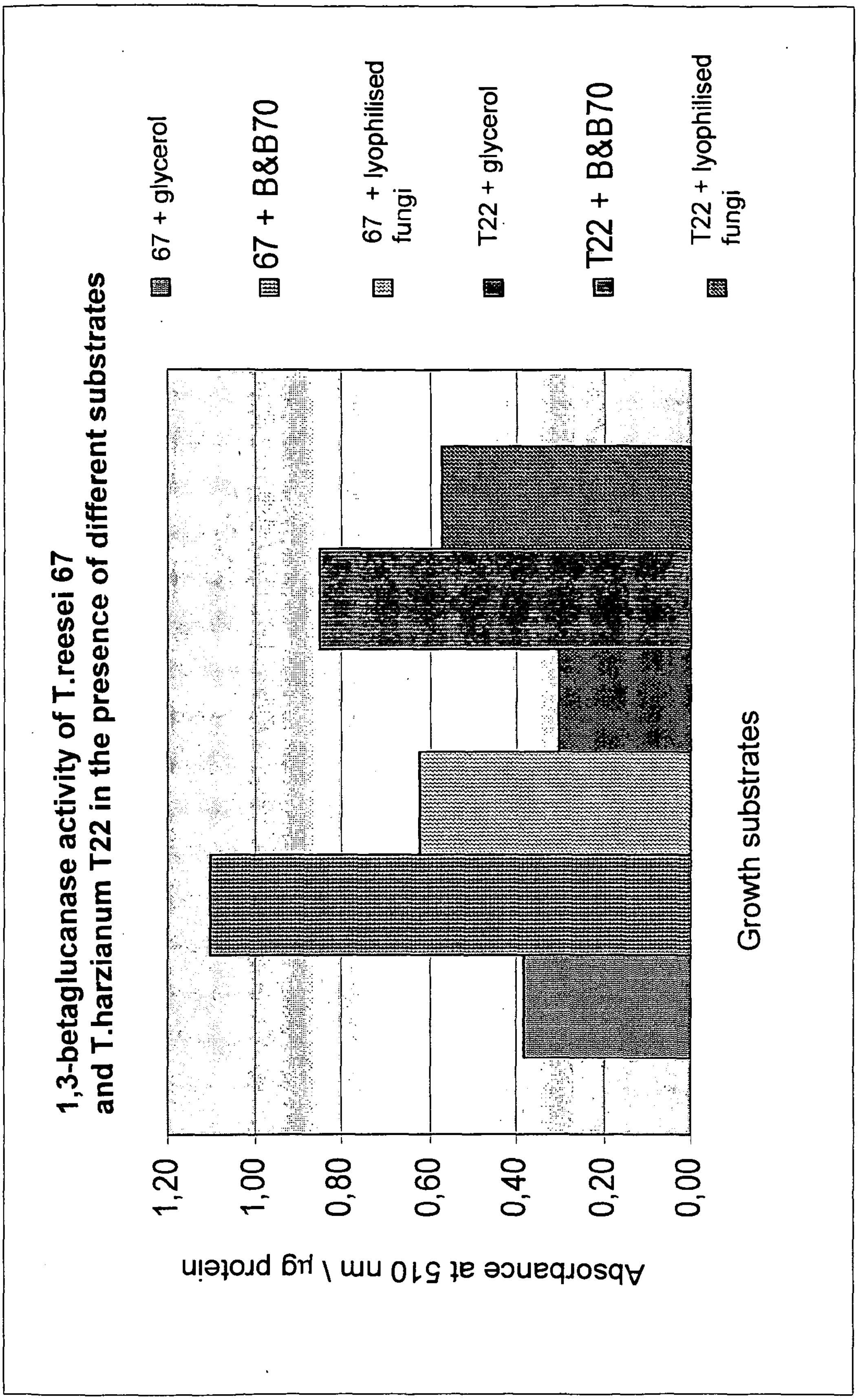
1,3-betaglucanase activity of T.reesei 67
and T.harzianum T22 in the presence of different substrates
Absorbance at 510 nm \ µg protein
1,20
1,00
0,80
0,60
0,40
0,20
0,00
Growth substrates
67 + glycerol
67 + B&B70
67 + lyophilised fungi
T22 + glycerol
T22 + B&B70
T22 + lyophilised fungi

Figure 7

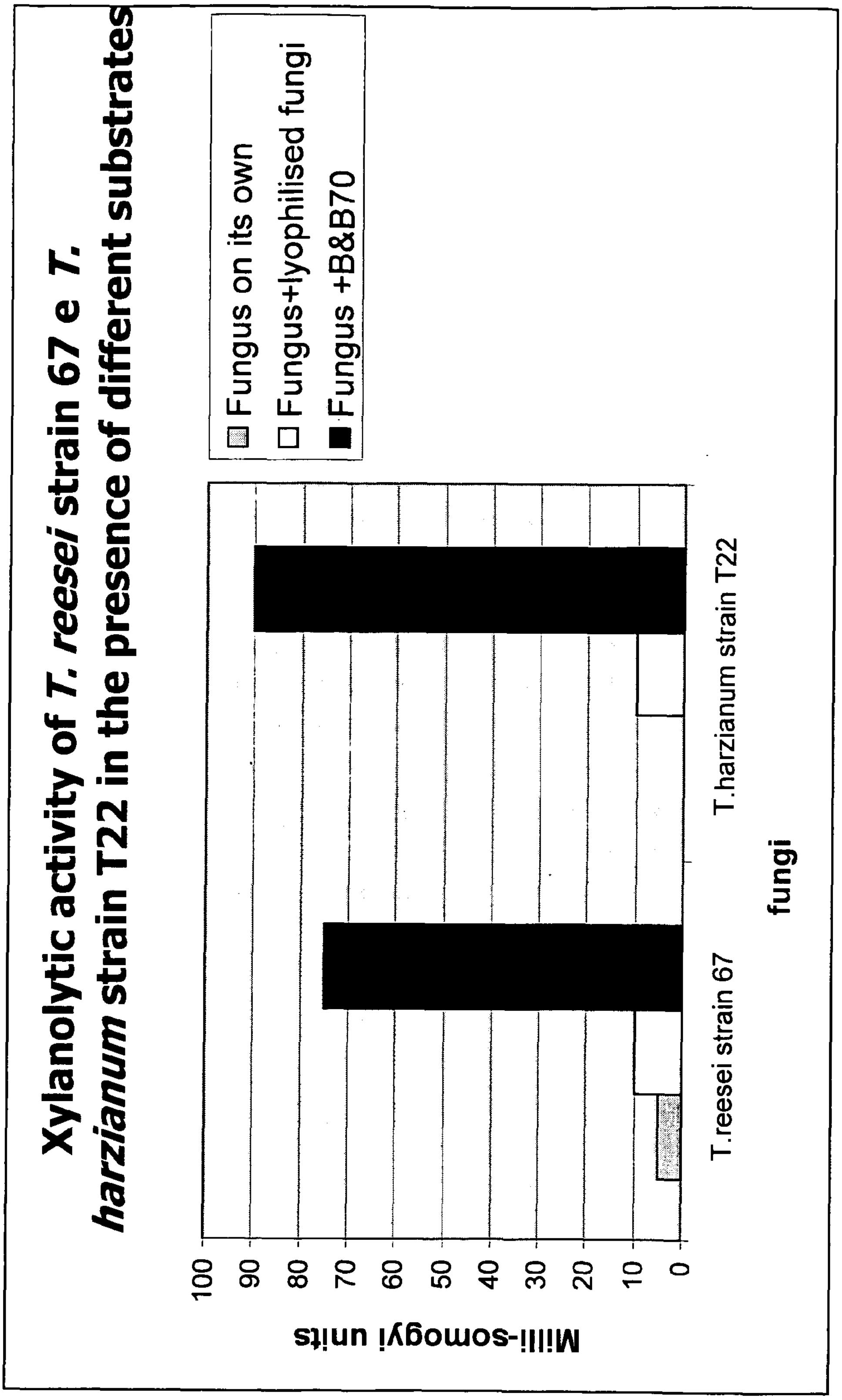
Xylanolytic activity of T. reesei strain 67 e T. harzianum strain T22 in the presence of different substrates
Fungus on its own
Fungus+lyophilised fungi
Fungus +B&B70
Milli-somogyi units
100
90
80
70
60
50
40
30
20
10
0
T.reesei strain 67
T.harzianum strain T22
fungi

Figure 8

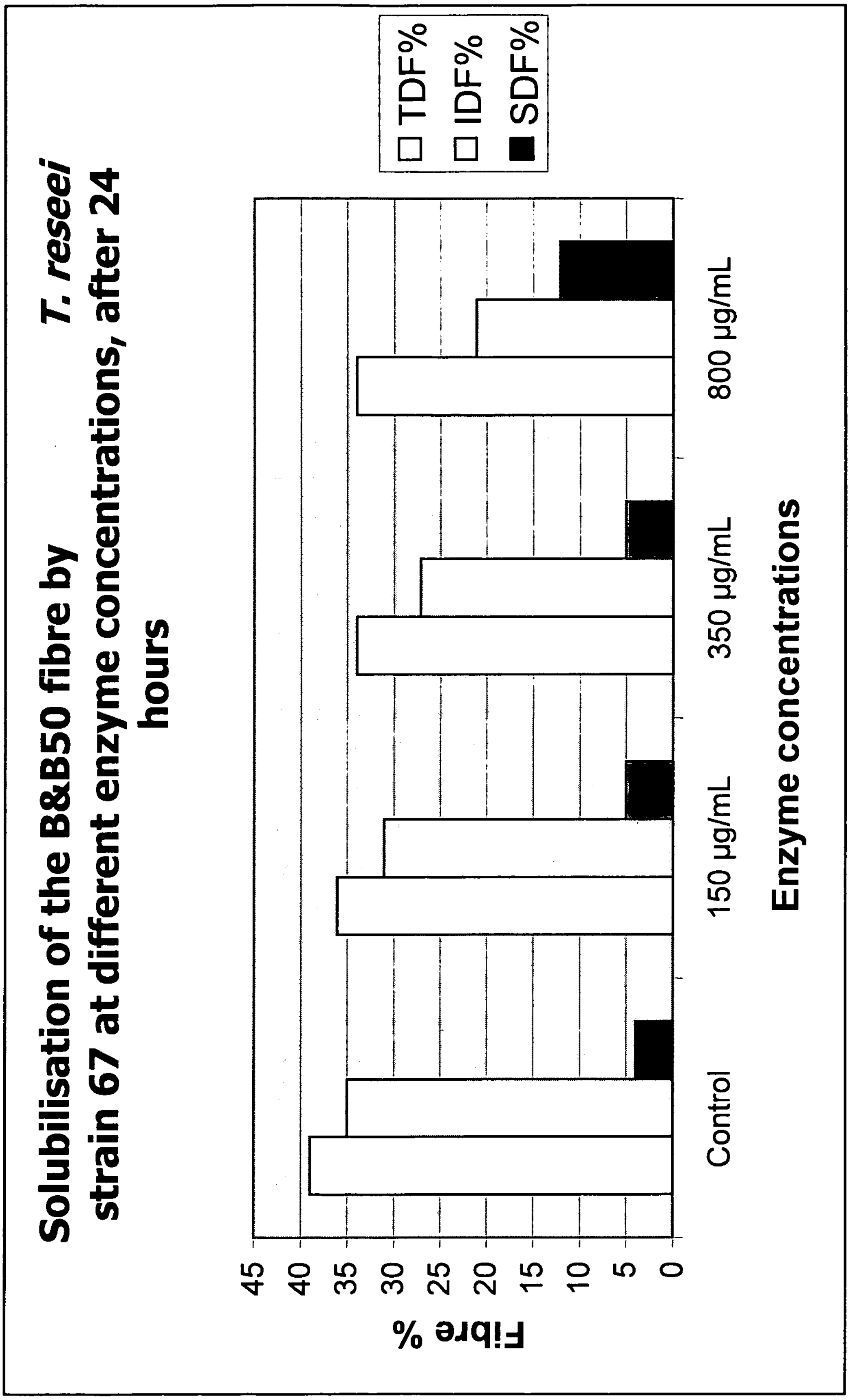
Solubilisation of the B&B50 fibre by *T. reseei* strain 67 at different enzyme concentrations, after 24 hours
Fibre %
45
40
35
30
25
20
15
10
5
0
Control
150 µg/mL
350 µg/mL
800 µg/mL
Enzyme concentrations
TDF%
IDF%
SDF%

Figure 9

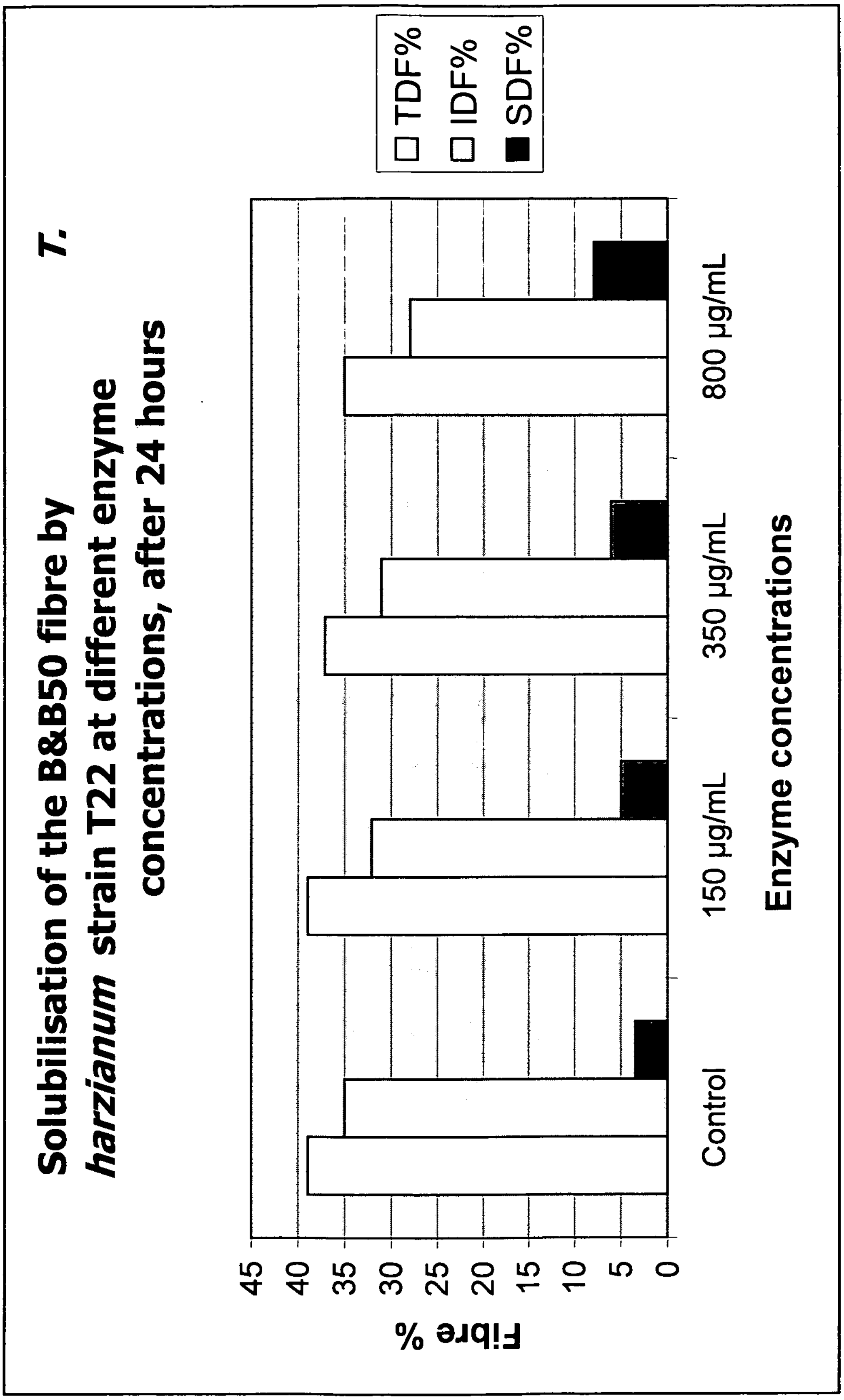
Solubilisation of the B&B50 fibre by *T. harzianum* strain T22 at different enzyme concentrations, after 24 hours
TDF%
IDF%
SDF%
Fibre %
45
40
35
30
25
20
15
10
5
0
Control
150 µg/mL
350 µg/mL
800 µg/mL
Enzyme concentrations

Figure 10

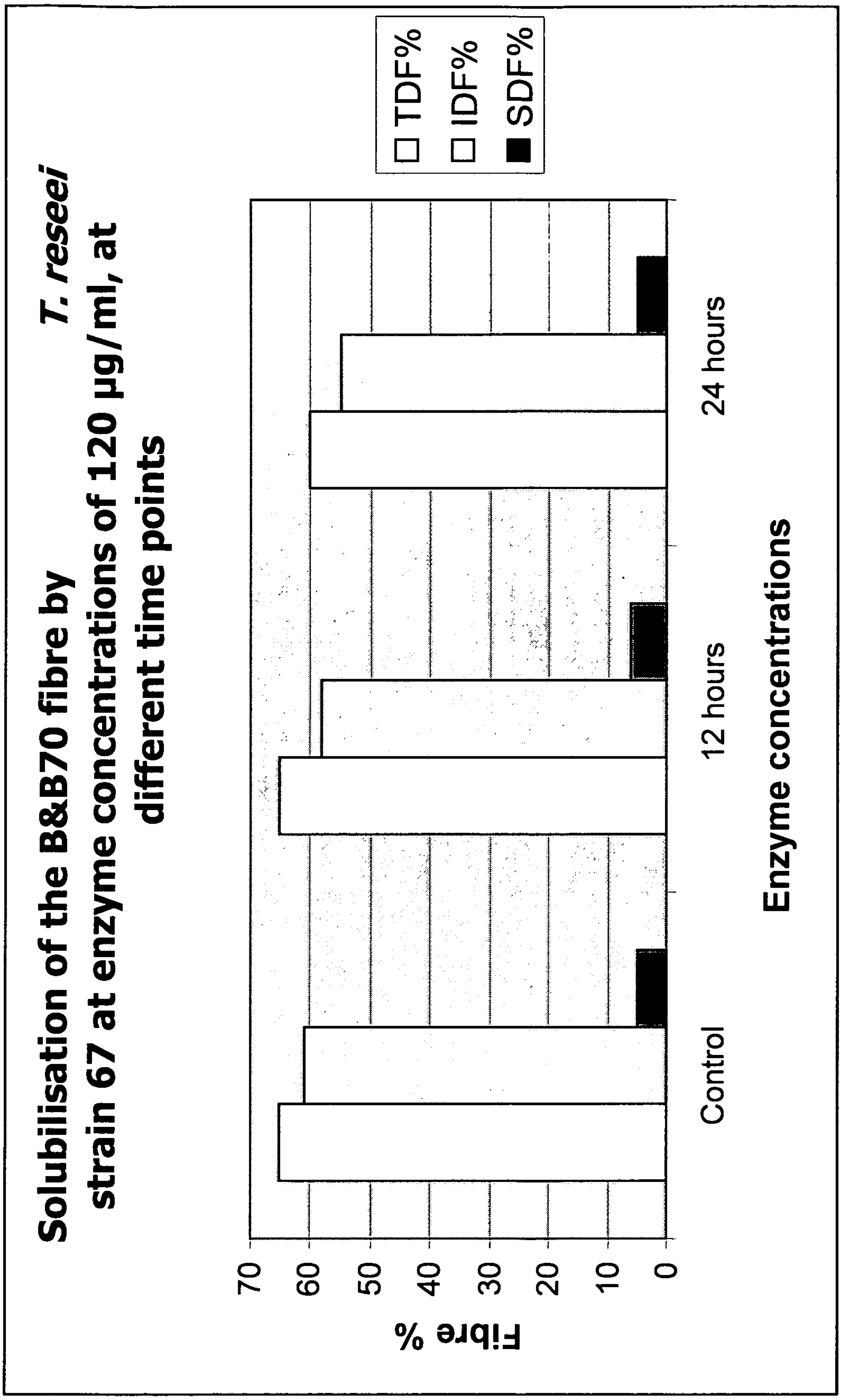
Solubilisation of the B&B70 fibre by *T. reseei*
strain 67 at enzyme concentrations of 120 µg/ml, at
different time points
TDF%
IDF%
SDF%
Fibre %
70
60
50
40
30
20
10
0
Control
12 hours
24 hours
Enzyme concentrations

Figure 11

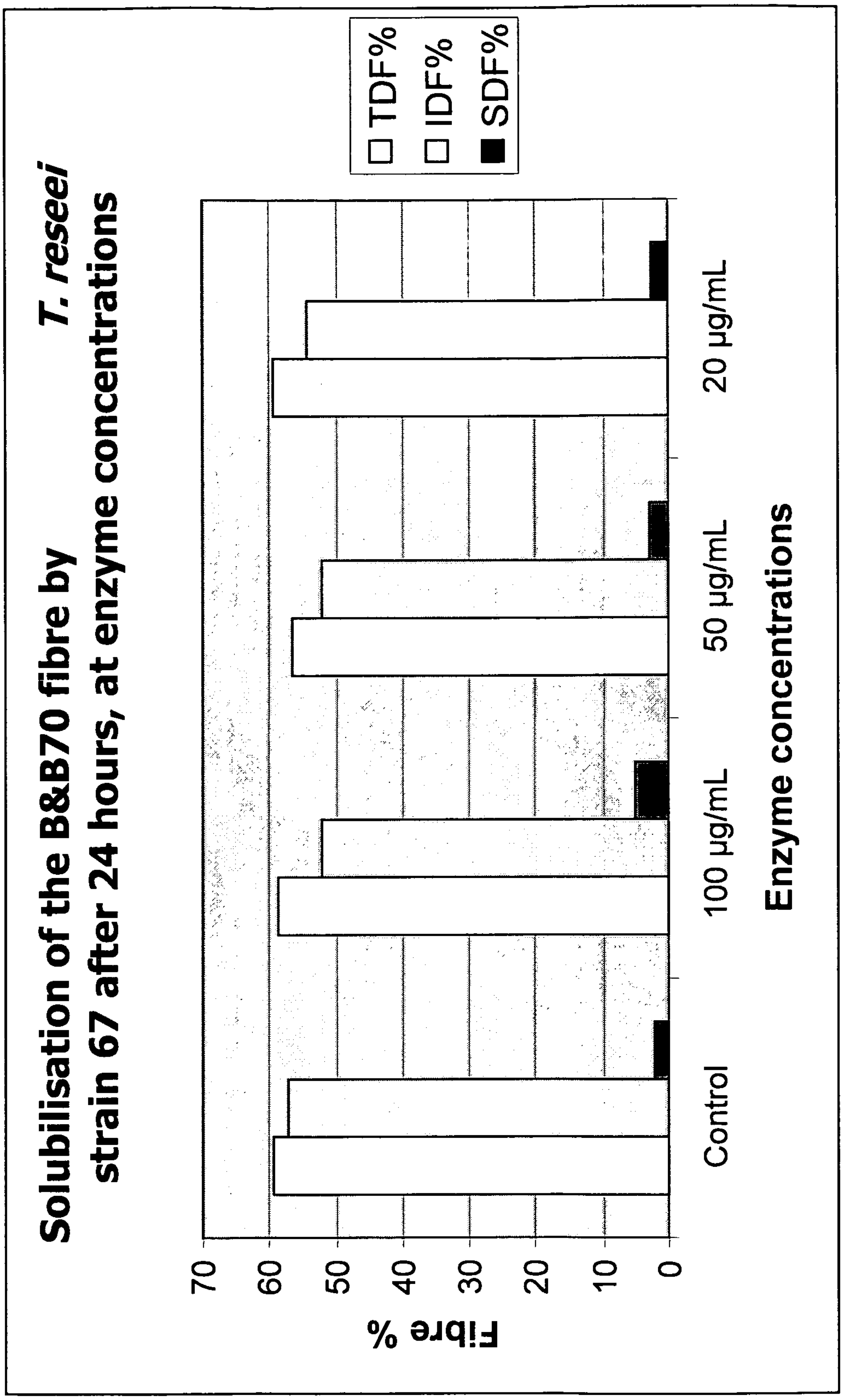
Solubilisation of the B&B70 fibre by strain 67 after 24 hours, at enzyme concentrations
T. reseei
TDF%
IDF%
SDF%
Fibre %
70
60
50
40
30
20
10
0
Control
100 µg/mL
50 µg/mL
20 µg/mL
Enzyme concentrations

Figure 12

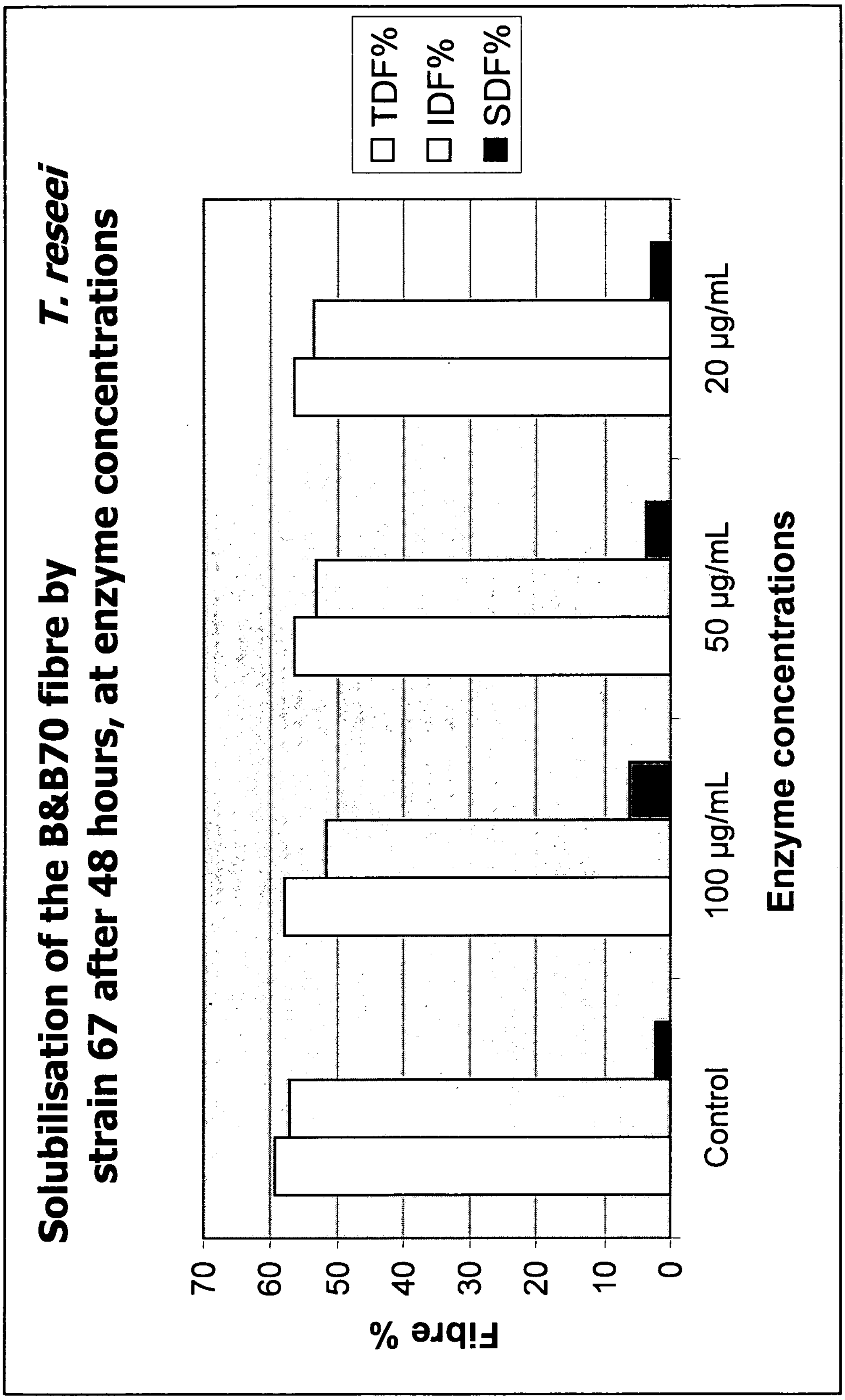
Solubilisation of the B&B70 fibre by T. reseei
strain 67 after 48 hours, at enzyme concentrations
TDF%
IDF%
SDF%
Fibre %
70
60
50
40
30
20
10
0
Control
100 µg/mL
50 µg/mL
20 µg/mL
Enzyme concentrations

Figure 13

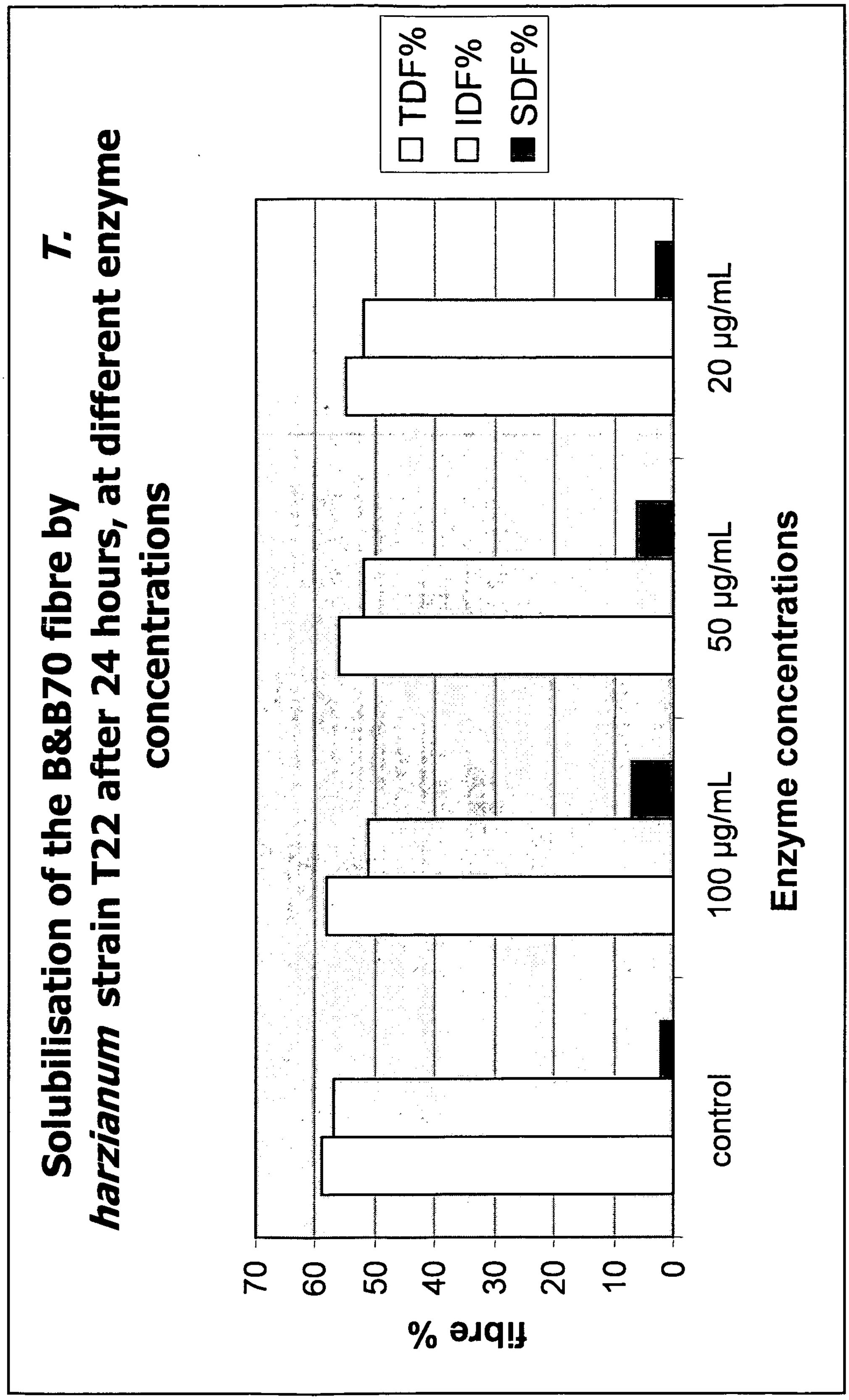

Solubilisation of the B&B70 fibre by *T. harzianum* strain T22 after 24 hours, at different enzyme concentrations
TDF%
IDF%
SDF%
fibre %
70
60
50
40
30
20
10
0
control
100 µg/mL
50 µg/mL
20 µg/mL
Enzyme concentrations

Figure 14

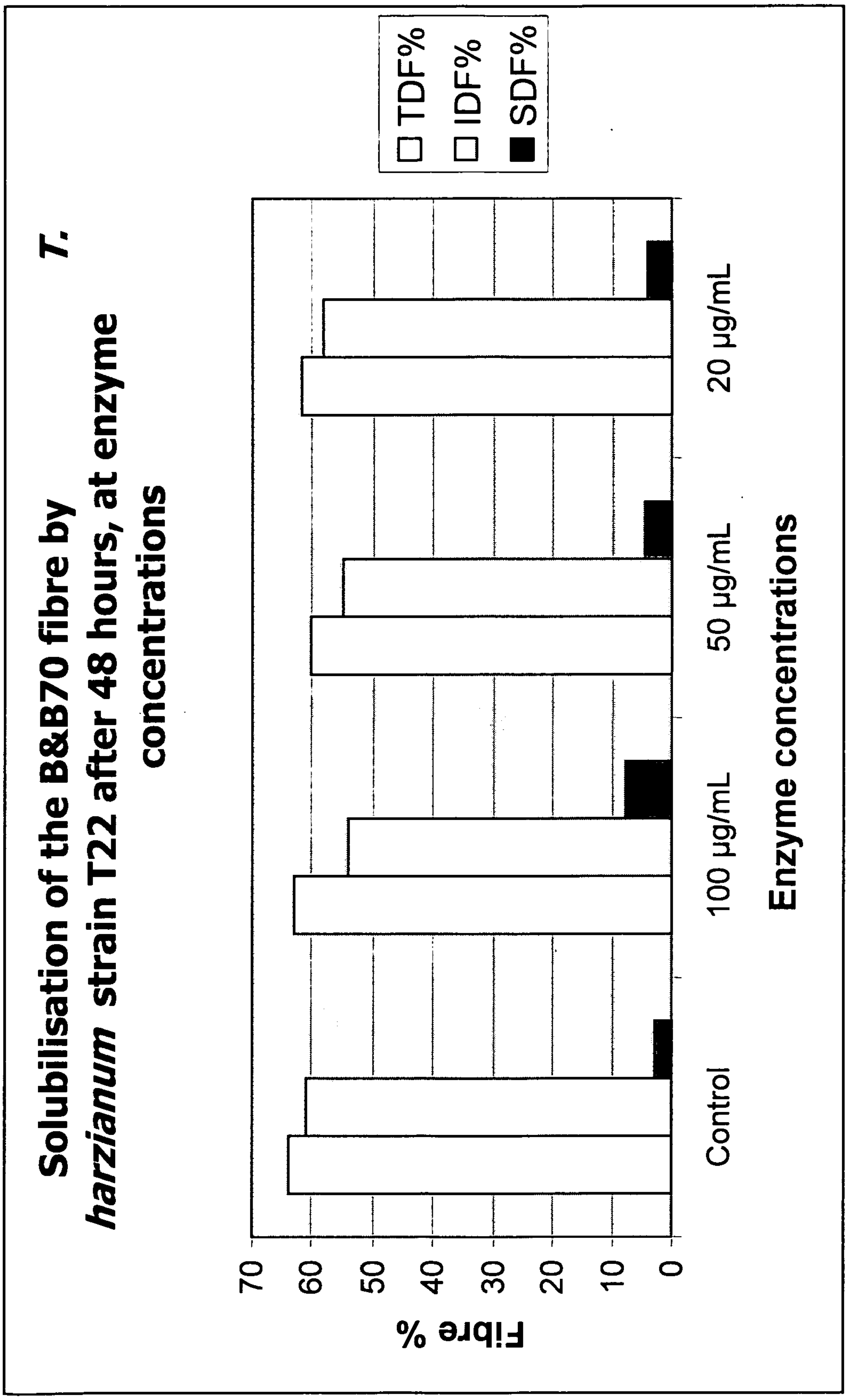
Solubilisation of the B&B70 fibre by T. harzianum strain T22 after 48 hours, at enzyme concentrations
Fibre %
70
60
50
40
30
20
10
0
Control
100 µg/mL
50 µg/mL
20 µg/mL
Enzyme concentrations
TDF%
IDF%
SDF%

Figure 15

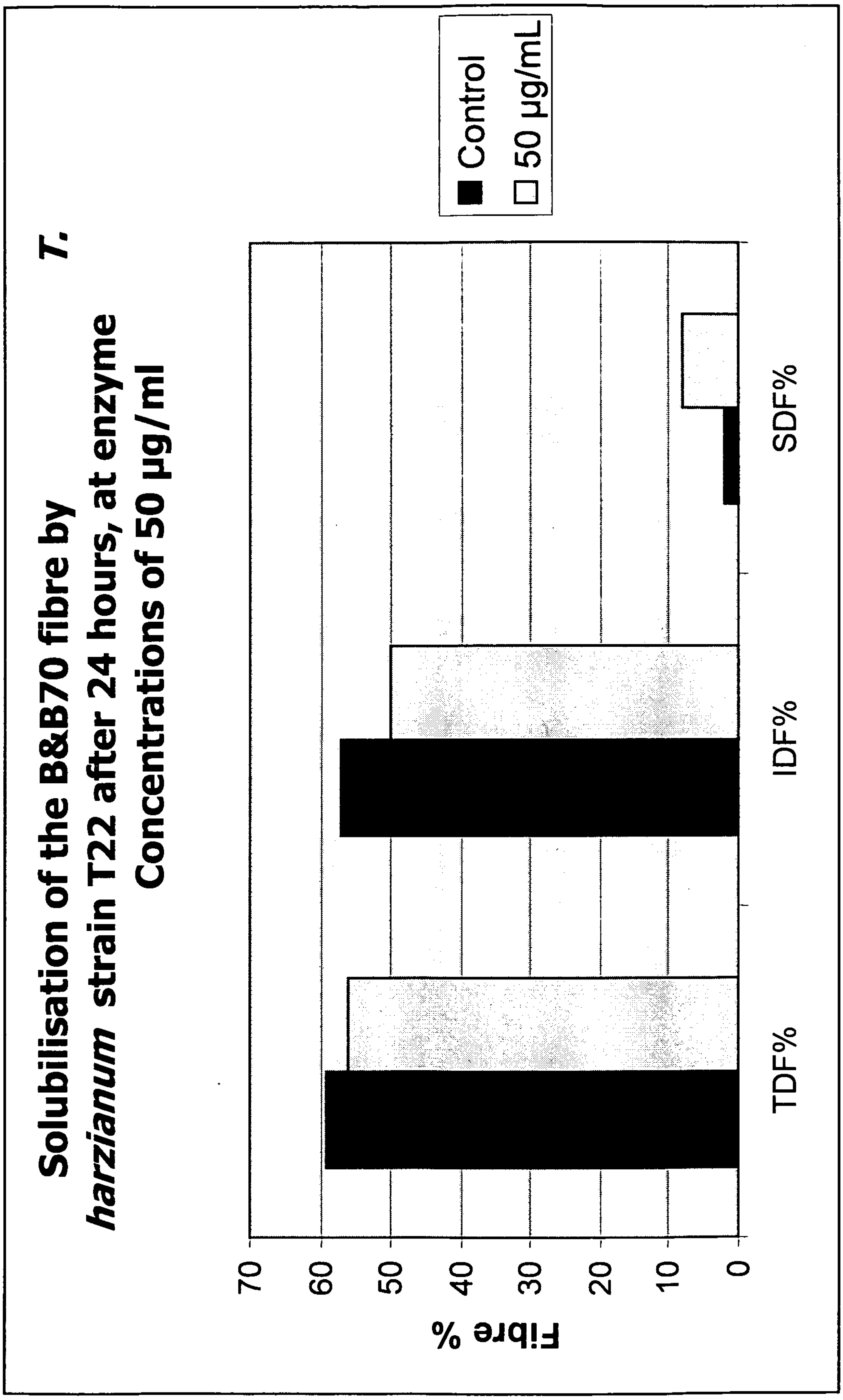
Solubilisation of the B&B70 fibre by *T. harzianum* strain T22 after 24 hours, at enzyme Concentrations of 50 µg/ml
Control
50 µg/mL
Fibre %
70
60
50
40
30
20
10
0
TDF%
IDF%
SDF%

Figure 16

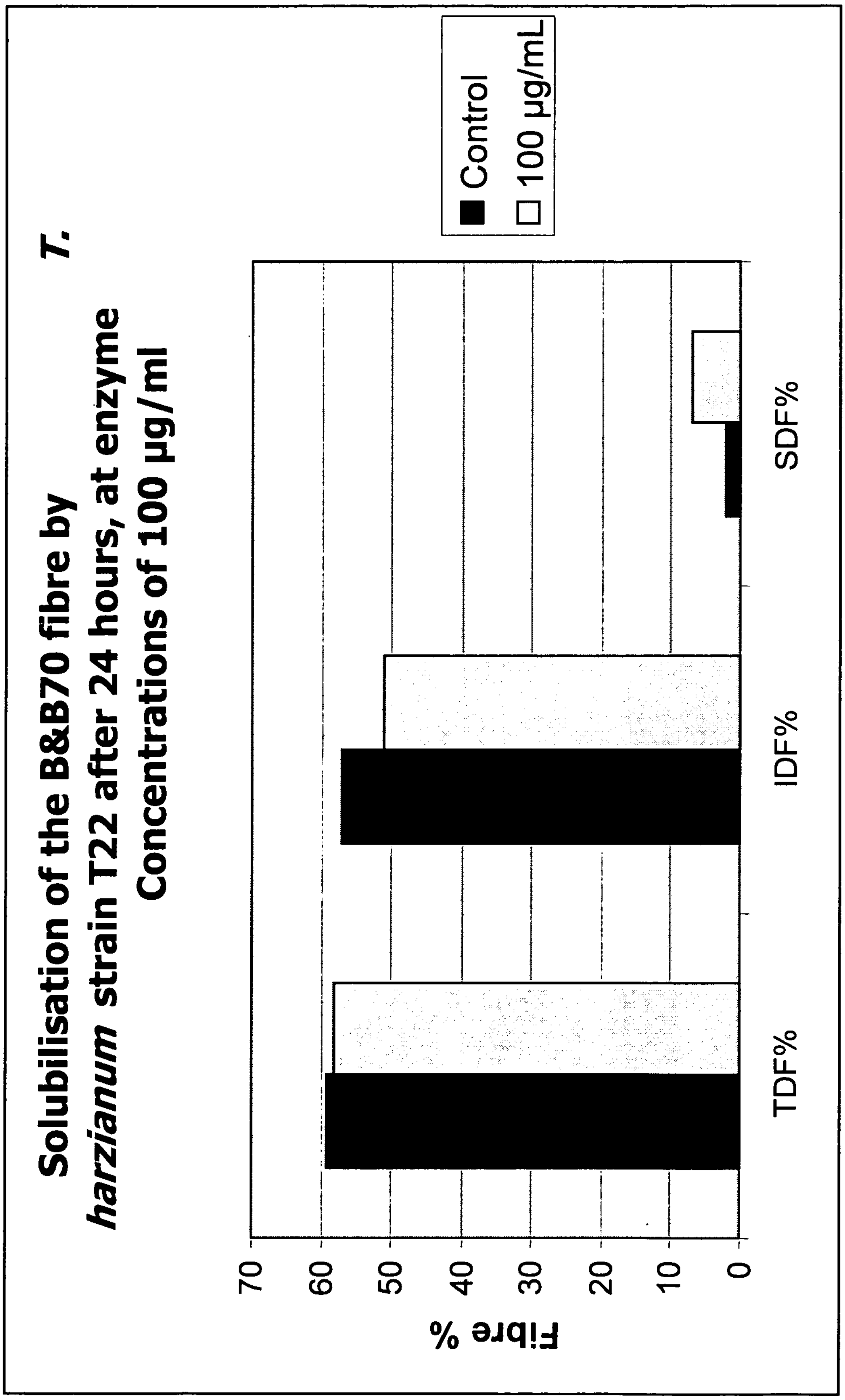
Solubilisation of the B&B70 fibre by *T. harzianum* strain T22 after 24 hours, at enzyme Concentrations of 100 µg/ml
Fibre %
70
60
50
40
30
20
10
0
TDF%
IDF%
SDF%
Control
100 µg/mL

Figure 17

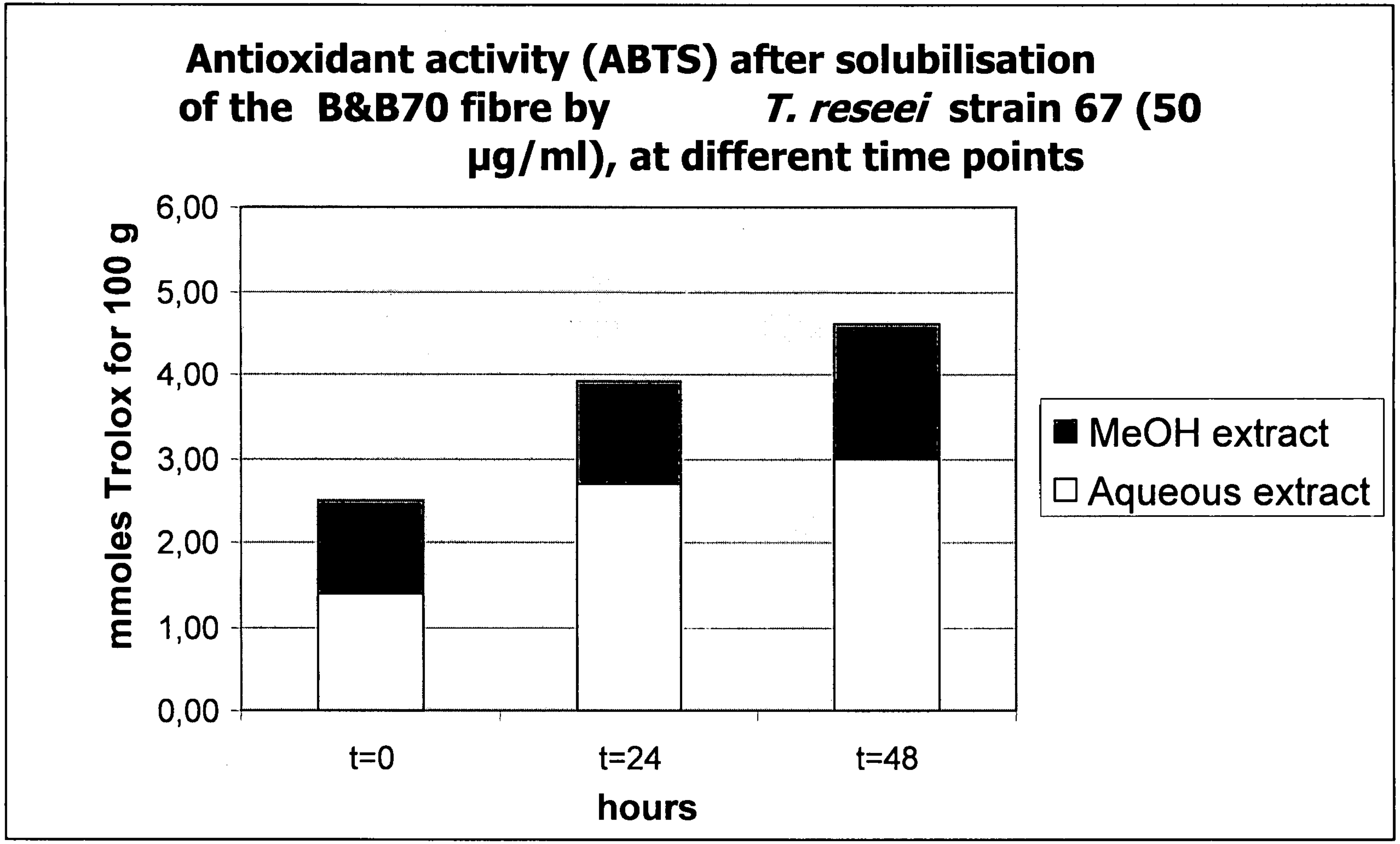
Antioxidant activity (ABTS) after solubilisation of the B&B70 fibre by *T. reseei* strain 67 (50 µg/ml), at different time points
mmoles Trolox for 100 g
6,00
5,00
4,00
3,00
2,00
1,00
0,00
t=0
t=24
t=48
hours
MeOH extract
Aqueous extract

Figure 18

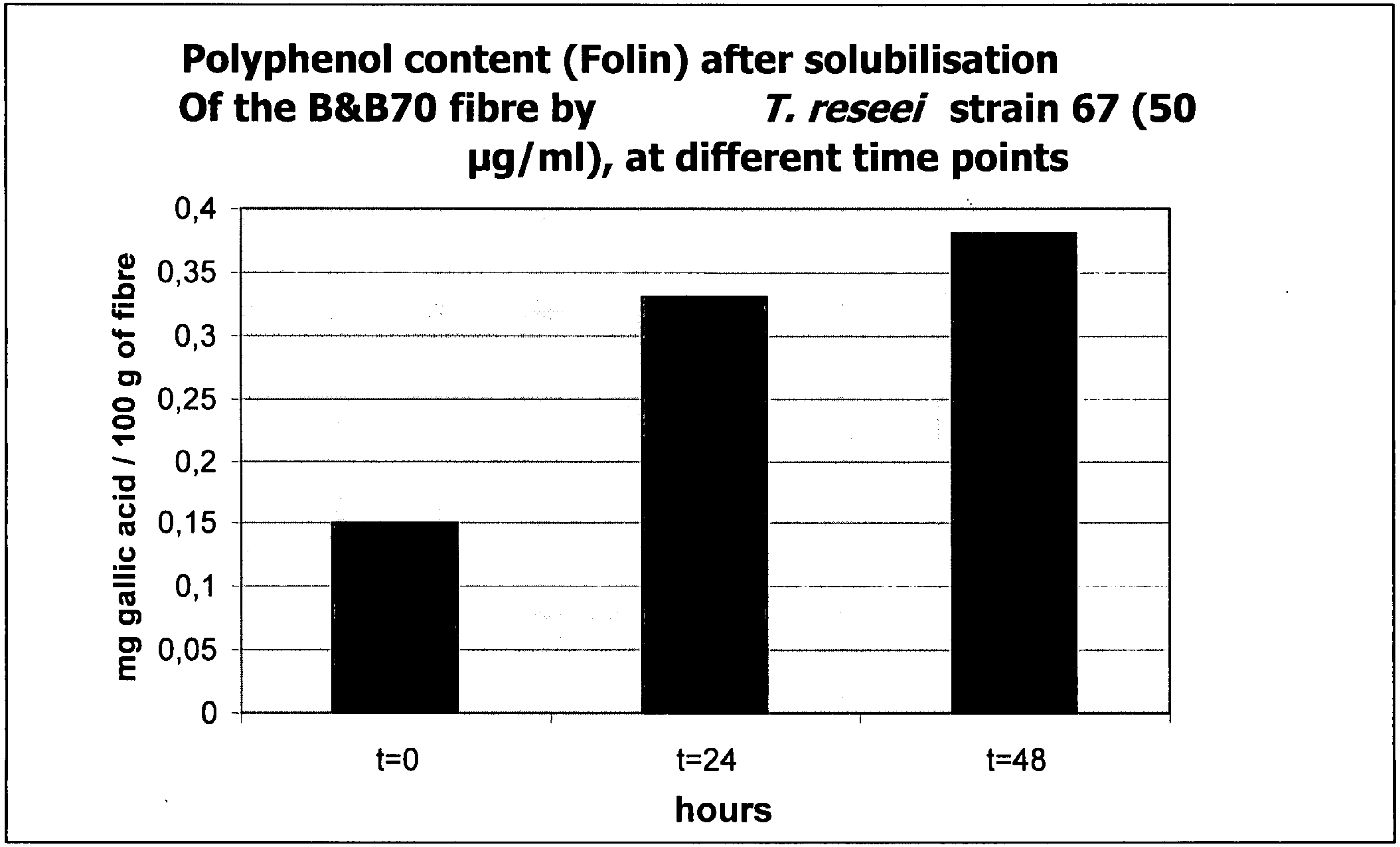
Polyphenol content (Folin) after solubilisation Of the B&B70 fibre by T. reseei strain 67 (50 µg/ml), at different time points
mg gallic acid / 100 g of fibre
0,4
0,35
0,3
0,25
0,2
0,15
0,1
0,05
0
t=0
t=24
t=48
hours

Figure 19

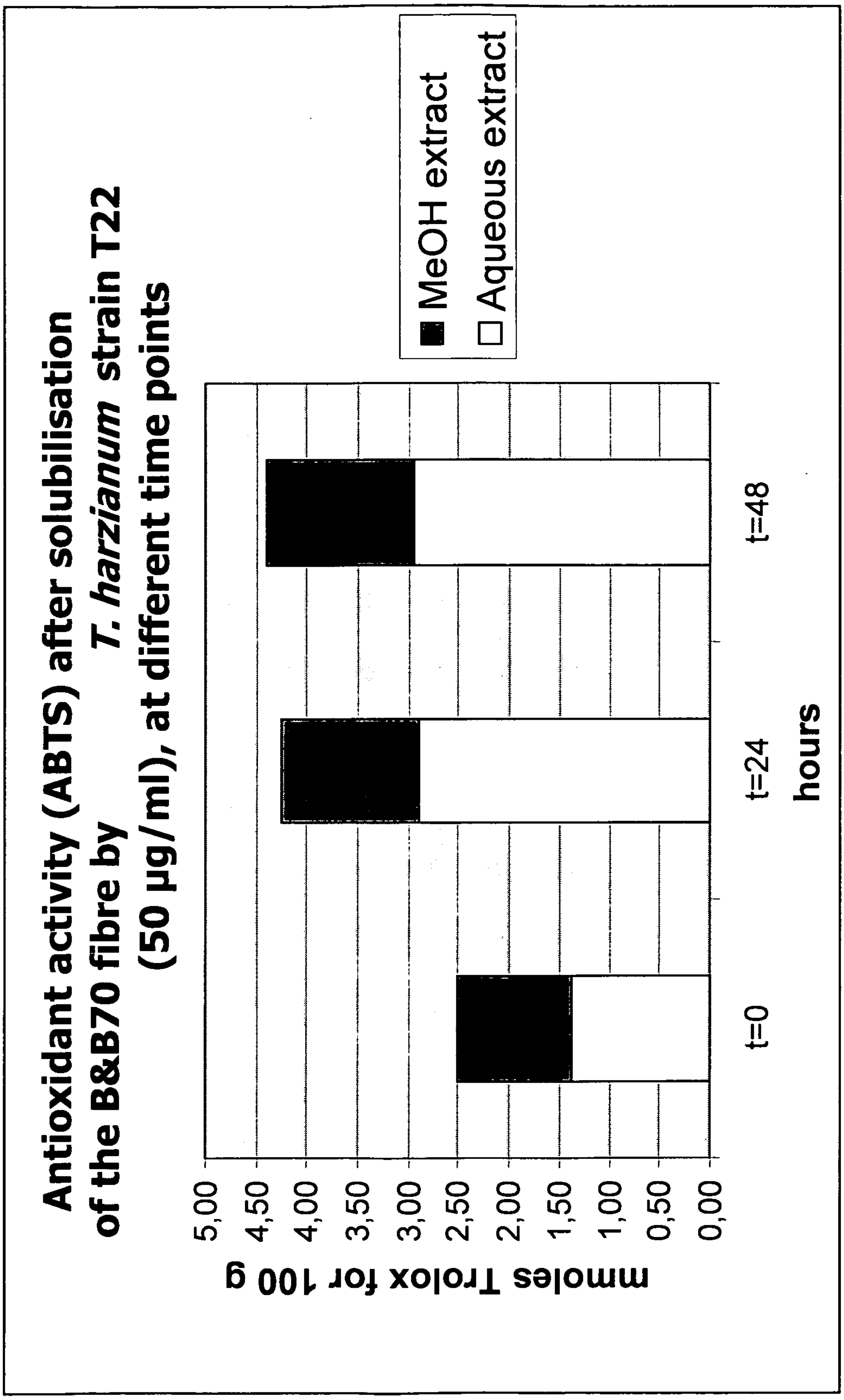
Antioxidant activity (ABTS) after solubilisation
of the B&B70 fibre by T. harzianum strain T22
(50 µg/ml), at different time points
mmoles Trolox for 100 g
5,00
4,50
4,00
3,50
3,00
2,50
2,00
1,50
1,00
0,50
0,00
t=0
t=24
t=48
hours
MeOH extract
Aqueous extract

Figure 20

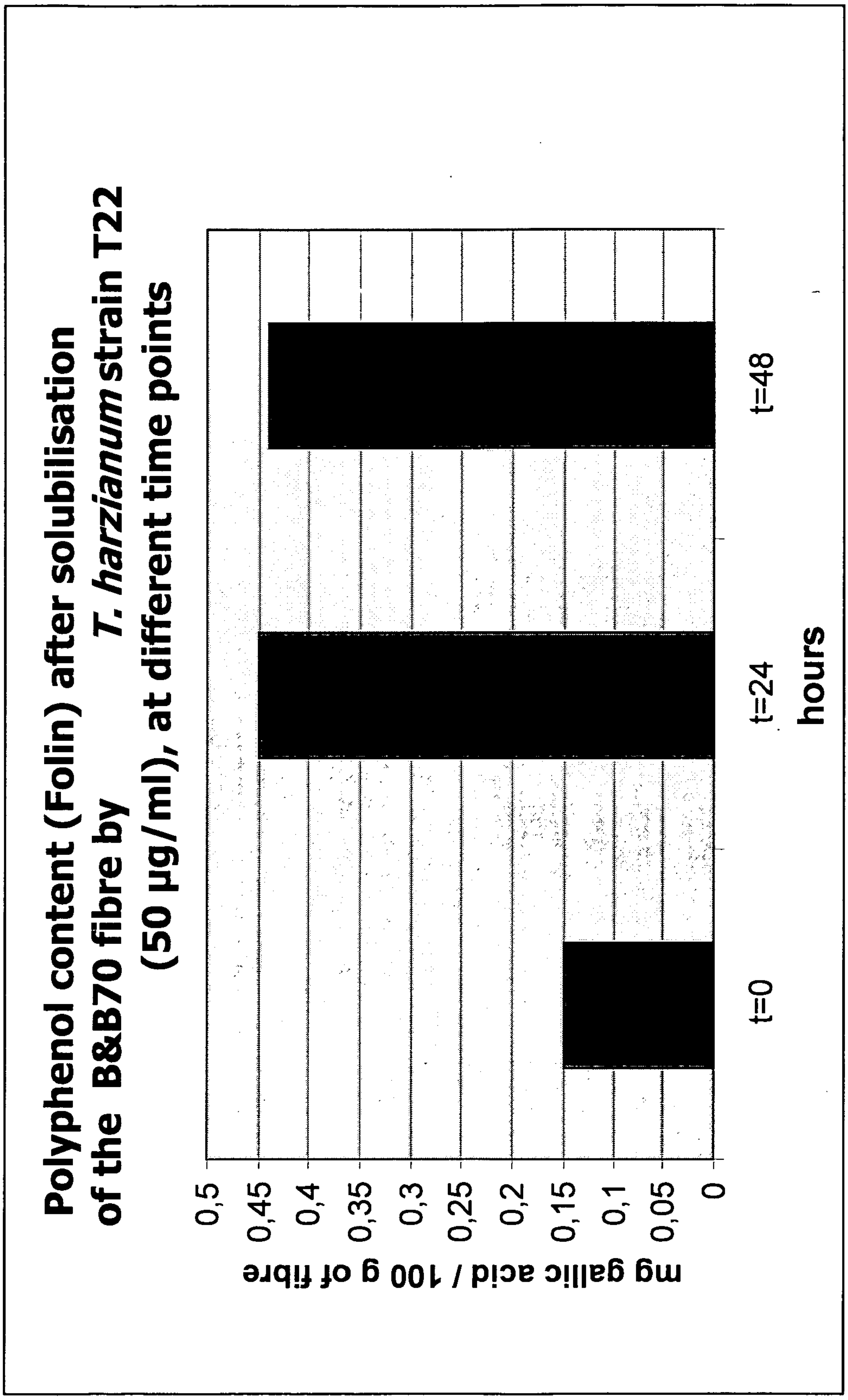
Polyphenol content (Folin) after solubilisation
of the B&B70 fibre by T. harzianum strain T22
(50 µg/ml), at different time points
mg gallic acid / 100 g of fibre
0,5
0,45
0,4
0,35
0,3
0,25
0,2
0,15
0,1
0,05
0
t=0
t=24
t=48
hours

Europäisches Patentamt
European Patent Office
Office européen des brevets

# EUROPEAN SEARCH REPORT

Application Number
EP 08 42 5635

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NAPOLITANO AURORA ET AL: "Treatment of cereal products with a tailored preparation of Trichoderma enzymes increases the amount of soluble dietary fiber" JOURNAL OF AGRICULTURAL AND FOOD CHEMISTRY, vol. 54, no. 20, October 2006 (2006-10), pages 7863-7869, XP002517935 ISSN: 0021-8561 * page 7864, left-hand column - page 7868, left-hand column * ----- | 1-20 | INV. A23L1/308 A23L1/10 |
| D,A | US 5 458 893 A (SMITH JOHN J [US]) 17 October 1995 (1995-10-17) * columns 2-4 * * column 8, lines 64-35 * ----- | 1-20 | |
| A | AZIN ET AL: "Production of xylanase by Trichoderma longibrachiatum on a mixture of wheat bran and wheat straw: Optimization of culture condition by Taguchi method" ENZYME AND MICROBIAL TECHNOLOGY, STONEHAM, MA, US, vol. 40, no. 4, 16 February 2007 (2007-02-16), pages 801-805, XP005892501 ISSN: 0141-0229 * page 802, left-hand column * Results - Effect of carbon source ----- | 1-20 | TECHNICAL FIELDS SEARCHED (IPC): A23L |

The present search report has been drawn up for all claims

1

| Place of search | Date of completion of the search | Examiner |
|---|---|---|
| The Hague | 5 March 2009 | Hartlieb, Ariane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 08 42 5635

This annex lists the patent family members relating to the patent documents cited in the above-mentioned European search report.
The members are as contained in the European Patent Office EDP file on
The European Patent Office is in no way liable for these particulars which are merely given for the purpose of information.

05-03-2009

| Patent document cited in search report | | Publication date | Patent family member(s) | Publication date |
|---|---|---|---|---|
| US 5458893 | A | 17-10-1995 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6070720 B
- JP 4071466 B
- JP 3049662 B
- JP 2303459 A
- US 5458893 A


### Non-patent literature cited in the description


- **Alexander, C.** Two for the price of one: antioxidant dietary fibre. *Food Engineering & Ingredients,* April 2007, vol. 32 (1), 18-19
- **Ang J.F.** Powdered cellulose and the development of new generation healthier foods. *Cereals Foods World,* March 2001, vol. 46 (3), 107-111
- Cereal Food World. American Association of Cereal Chemists, 2001, vol. 46, 112-129
- **Cummings J.H ; M.J. Hill ; T. Jivraj ; H. Houston ; W.J. Branch ; D.J.A. Jenkins.** The effect of meat protein and dietary fiber on colonic function and metabolism I. Changes in bowel habit, bile acid excretion and calcium absorption. *American journal of Clinical Nutrition,* 1979, vol. 32, 2086-2093
- Multifunctional complex of components. *Dietary Fibre Conference,* 12 June 2006
- **Eveleigh D.E.** Cellulase: a perspective. *Philosophical Transanctions of the Royal Society of London, Serie B-Biological Sciences,* 1987, vol. 321, 435-447
- *Fed. Reg.,* 2002, vol. 67, 191
- **Gallaher D. ; C. A. Hassel ; K.J. Lee ; C.M Gallaher.** Viscosity and fermentability as attributes of dietary fibre responsible for the hypocholesterolemic affect in hamsters. *Journal of Nutrition,* February 1993, vol. 123 (2), 244-252
- **Gurkin S.** Hydrocolloids-Ingredients that add flexibility to tortilla processing. *Cereals Foods World,* February 2002, vol. 47 (2), 41-43
- **Harman, G. E. ; C. K. Hayes ; M. Lorito ; R.M. Broadway ; A. Di Pietro ; C. Peterbauer ; A. Tronsmo.** Chitinolytic enzymes of Trichoderma harzianum: purification of chitobiosidase and endochitinase. *Phytopathology,* 1993, vol. 83, 213-318
- **Inglett G.E.** Development of a dietary fiber gel for calorie-reduced foods. *Cereals Foods World,* May 1997, vol. 42 (5), 382-385
- **Mandels M. ; R.E. Andreotti.** Problems and challenges in the cellulose to cellulase fermentation. *Process Biochemistry,* 1978, vol. 13, 6-13
- **Manderson K. ; M. Pinart ; K. M. Tuohy ; W. E. Grace ; A. T. Hotchkiss ; W. Widmer ; M. P. Yadhav ; G. R. Gibson ; R. A. Rastall.** Vitro Determination of prebiotic properties of oligosaccharides derived from an orange juice manufacturing by-product stream. *Applied and Environmental Microbiology,* December 2005, vol. 71 (12), 8383-8389
- **Miller J.N. ; A.T. Diplock ; C.A. Rice Evans.** Evaluation of the total antioxidant activity as a market of deterioration of apple juice on storage. *J. Agric. Food Chem.,* 1995, vol. 43, 1794-1801
- **Miller J.N. ; C.A. Rice Evans.** Factors influencing the antioxidant activity determined by ABTS radical cation assay. *Free radical Res.,* 1997, vol. 26, 195-199
- **Miller J.N. ; C.A. Rice Evans.** The relative contributions of ascorbic acid and phenolic antioxidants to the total antioxidant activity of orange and apple fruit juice and blackcurrant drink. *Food Chem.,* 1997, vol. 60, 331-337
- **Nevalainen K.M.H. ; E.T. Palva ; M.J. Bailey.** A high cellulase producing mutant strain of Trichoderma reseei. *Enzyme and Microbial Technology,* 1980, vol. 2, 59-60
- **Palframan R. ; G. R. Gibson ; R. A. Rastall.** Development of a quantitative tool for the comparison of the prebiotic effect of dietary oligosaccharides. *Lett. Appl. Microbiol.,* 2003, vol. 37, 281-284
- **Pellegrini N. ; M. Yang ; C.A. Rice-Evans.** Screening of dietary carotenoids and carotenoids-rich fruits extracts for the antioxidant activities applying ABTS radical cation decolorization assay. *Methods Enzymol.,* 1999, vol. 299, 379-389
- **Prosky L. ; N.-G. Asp ; T.F. Schweizer ; J.W. DeVries ; I. Furda.** Determination of insoluble, soluble and total dietary fibre in food and food products. Interlaboratory study. *Journal of Association Official Analytical Chemistry,* 1998, vol. 71, 1017-1023
- **Rice-Evans C.A. ; Miller, N.J. ; Paganga G.** Antioxidant properties of phenolic compounds. *Trends in Plant Science,* 1997, vol. 2 (4), 152-157

- **Roberts D. ; S. Truswell ; A. Bencke ; H. Drewar ; E. Farmakalidis.** The cholesterol lowering effects of a breakfast cereal containing psyllium fibre. *Med J.,* 1994, vol. 161, 660-664
- **Singleton V. L. ; J.A. Rossi.** Colorimetry and total phenolics with phosphomolybdic-phosphotungstic acid reagents. *Am. J. Enol. Vitic.,* 1965, vol. 16, 144-158
- **Szengyel Z. ; G. Zacchi ; A. Varga ; K. Reczey.** Cellulase production of Trichoderma reseei RUT C30 using steam-pretreated spruce. Hydrolytic potential of cellulases on different substrate. *Applied Biochemistry and Biotechnology Spring,* 2000, vol. 84-86, 679-691
- Butyrate and the colonocyte: production, absorption, metabolism and therapeutic implications. **Velàzquez O.C. ; H.M. Lederer ; J.L. Rombeau.** Dietary Fibre in Health and Disease. Plenum Press, 1997, 123-134
- The manner in which food controls the bulk of the feces. **Williams R.D. ; W.H. Olmstead.** Annals of Internal Medicine. 1936, vol. 10, 717-727